(19) Europäisches Patentamt
European Patent Office
Office européen des brevets

(11) EP 1 495 070 B1

(12) EUROPEAN PATENT SPECIFICATION

(45) Date of publication and mention of the grant of the patent:
**17.12.2008 Bulletin 2008/51**

(21) Application number: **03716463.9**

(22) Date of filing: **12.03.2003**

(51) Int Cl.:
***C08J 7/14*** *(2006.01)* ***C08F 8/00*** *(2006.01)*
***C08F 16/06*** *(2006.01)* ***G02B 5/30*** *(2006.01)*

(86) International application number:
**PCT/US2003/007436**

(87) International publication number:
**WO 2003/087202 (23.10.2003 Gazette 2003/43)**

# (54) A METHOD FOR MAKING AN INTRINSIC POLARIZER FROM A POLYMERIC SHEET

VERFAHREN ZUR HERSTELLUNG EINES INTRINSISCHEN POLARISATORS AUS EINER POLYMERFOLIE

PROCEDE DE FABRICATION D'UN POLARISATEUR INTRINSEQUE A PARTIR D'UNE FEUILLE POLYMERE

(84) Designated Contracting States:
**AT BE BG CH CY CZ DE DK EE ES FI FR GB GR HU IE IT LI LU MC NL PT RO SE SI SK TR**

(30) Priority: **06.04.2002 US 118489**
**20.10.2002 US 277252**

(43) Date of publication of application:
**12.01.2005 Bulletin 2005/02**

(73) Proprietor: **3M Innovative Properties Company**
**St. Paul MN 55133-3427 (US)**

(72) Inventors:
- **CAEL, John J.,**
  **Saint Paul, MN 55133-3427 (US)**
- **BALICH, Jason W.,**
  **Saint Paul, MN 55133-3427 (US)**
- **NAGARKAR, Pradnya V.,**
  **Saint Paul, MN 55133-3427 (US)**
- **VOGEL, Kim M.,**
  **Saint Paul, MN 55133-3427 (US)**
- **SAHOUANI, Hassan**
  **Saint Paul, MN 55133-3427 (US)**

(74) Representative: **HOFFMANN EITLE**
**Patent- und Rechtsanwälte**
**Arabellastrasse 4**
**81925 München (DE)**

(56) References cited:
**WO-A-97/21123** **US-A- 2 445 555**
**US-A- 4 396 642** **US-A- 4 859 039**

EP 1 495 070 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This invention relates to a method for making synthetic dichroic plane polarizers based on molecularly oriented polyvinyl alcohol sheets and, in particular, a high efficiency intrinsic polarizing sheet.

Normally, light waves vibrate in a large number of planes about the axis of a light beam. If the waves vibrate in one plane only, the light is said to be plane polarized. Several useful optical ends and effects can be accomplished by plane polarized light. For example, in the manufacture of electrooptical devices such as liquid crystal display screens, crossed polarizers are used in conjunction with an addressable liquid crystal interlayer to provide the basis for image formation. In the field of photography, polarizing filters have been used to reduce the glare and the brightness of specular reflection. Polarizing filters, circular polarizers or otherwise, have also been used for glare reduction in display device screens.

Linear light polarizing films, in general, owe their properties of selectively passing radiation vibrating along a given electromagnetic radiation vector, and absorbing electromagnetic radiation vibrating along a second given electromagnetic radiation vector, to the anisotropic character of the transmitting film medium. Dichroic polarizers are absorptive, linear polarizers having a vectoral anisotropy in the absorption of incident light. The term "dichroism" is used herein as meaning the property of differential absorption and transmission of the components of an incident beam of light depending on the direction of vibration of the components. Generally, a dichroic polarizer will transmit radiant energy along one electromagnetic vector and absorb energy along a perpendicular electromagnetic vector. A beam of incident light, on entering a dichroic polarizer, encounters two different absorption coefficients, one low and one high, so that the emergent light vibrates substantially in the direction of low absorption (high transmission).

Examples of synthetic dichroic polarizers are intrinsic polarizers, e.g., a polyvinylene-based polarizer such as a K-type polarizer. An intrinsic polarizer derives its dichroism from the light- absorbing properties of its matrix, rather than from the light-absorbing properties of dye additives, stains, or suspended crystalline material. Typically, intrinsic polarizers comprise a sheet of oriented poly(vinyl alcohol) having an oriented suspension of a dehydration product of polyvinyl alcohol, i.e., polyvinylene. Intrinsic polarizers of this kind are formed by heating the polymeric sheet in the presence of a dehydration catalyst, such as vapors of aqueous hydrochloric acid, to produce conjugated polyvinylene blocks and unidirectionally stretching the polymeric sheet prior to, subsequent to, or during the dehydration step to align the poly (vinyl alcohol) matrix. By orienting the poly(vinyl alcohol) matrix unidirectionally, the transition moments of the conjugated polyvinylene blocks or chromophores are also oriented, and the material becomes visibly dichroic. A second orientation step or extension step may be employed after the dehydration step as described in U.S. Pat. No. 5,666,223 (Bennett et al.).

In general, in one aspect, the invention features a method for making a polarizer from a polymeric sheet having an original length and including a hydroxylated linear high polymer. The polymeric sheet is stretched to a stretched length of from greater than 5.0 times to about 7.0 times the original length. A suitable dehydration catalyst is introduced to the polymeric sheet. The polymeric sheet and the catalyst are heated to effect partial dehydration of the polymeric sheet wherein light absorbing, vinylene block segments are formed.

The polymeric sheet is subjected to a boration treatment at a temperature of at least about 80°C. The present method can further comprise a step, wherein the stretehed and heated polymeric sheet is unidirectionally extended from 0% to about 70% of the stretched length.

The details of one or more embodiments of the invention are set forth in the accompanying drawings and the description below. Other features, objects, and advantages of the invention will be apparent from the description, drawings and examples, and from the claims.

FIG. 1 is a graph showing the absorbance versus the wavelength for two reference polarizing sheets and a polarizing sheet made according to an embodiment of the present invention;

FIG. 2 is a graph showing the absorbance versus the conjugation length for two prior art polarizing sheets and a polarizing sheet made according to an embodiment of the present invention;

FIG. 3 is a graph showing the transmission versus the wavelength for two reference crossed polarizers and a crossed polarizer made according to an embodiment of the present invention;

FIG. 4 is a graph showing the absorbance versus the wavelength for two reference crossed polarizers and a crossed polarizer made according to an embodiment of the present invention;

FIG. 5 is a graph showing the absorbance versus the wavelength for polarizing sheets made with and without dichroic yellow dye,

FIG. 6 is a graph showing the spectral dichroic ratio versus the wavelength for polarizing sheets made with and without dichroic yellow dye;

FIG. 7 is a graph showing the transmission versus the wavelength for crossed polarizers made with and without dichroic yellow dye;

FIG. 8 is a graph showing the absorbance versus the wavelength for polarizing sheets made with and without a blue dichroic dye;

FIG. 9 is a graph showing the effect of stretch temperature on representative samples having an initial stretch

of five times the original length;

FIG. 10 is a graph showing the effect of boration temperature on representative samples having an initial stretch of five times the original length;

FIG. 11 and FIG. 12 are graphs showing the photopic dichroic ratio versus the residence time in a boration solution for polarizing sheets made according to an embodiment of the present invention;

FIG. 13 is a graph showing the maximum photopic dichroic ratio versus the boration temperature for polarizing sheets made according to an embodiment of the present invention;

FIG. 14 is a graph showing the polarization efficiency versus transmittance for polarizing sheets at various processing parameters made according to an embodiment of the present invention;

FIG. 15 is a graph showing the polarization efficiency versus transmittance for polarizing sheets at two different degrees of polymerization made according to an embodiment of the present invention; and

FIG. 16 is a graph showing the dichroic ratio versus the boric acid concentration for polarizing sheets made according to an embodiment of the present invention.

The present invention relates to a method of making an enhanced intrinsic polarizer in which improved polarizing properties are obtained. The polarizer comprises a molecularly oriented sheet of polyvinylalcohol/polyvinylene block copolymer material having the polyvinylene blocks thereof formed by molecular dehydration of a sheet of polyvinylalcohol. The molecularly oriented sheet of polyvinylalcohol/polyvinylene block copolymer material preferably comprises a uniform distribution of light-polarizing molecules of polyvinylalcohol/polyvinylene block copolymer material varying in the length (n) of the conjugated repeating vinylene unit of the polyvinylene block of the copolymer throughout the range of from 2 to 25. The degree of orientation of the light polarizing molecules increases throughout the range with increasing length (n) of the polyvinylene blocks. Further, the concentration of each of the polyvinylene blocks, as determined by the absorption of light by the blocks, remains comparatively constant through the range. The degree of orientation of the molecules in conjunction with the concentration distribution of each polyvinylene block is sufficient to impart to the polymeric sheet a photopic dichroic ratio ($R_D$), of at least 75.

The dichroic ratio, $R_D$ is defined as:

$$R_D = A_z / A_y$$

where $A_z$ and $A_y$ are determined by absorption spectroscopy using a polarized light source.

Absorption is measured using a UV/VIS spectrophotometer having a polarizer placed, for example, in the sample beam. For measurement of photopic dichroic ratio, a beam of white light passes through a sample, through a high efficiency polarizing analyzer, through a photopic filter and then through a photo-detector. For measurement of spectral dichroic ratio, the beams are of a wavelength correspondent to the conjugation length of the chromophore under investigation. In both cases, an absorption spectrum between 400 nm and 700 nm is considered, with the optical axis of a film sample being parallel to the optical axis of the polarizer in the sample beam ($A_z$) and then after rotating the sample polarizer over 90 degrees ($A_y$). Thus, the absorption at the wavelength of maximum absorption is determined, from which $R_D$ can be calculated.

A method for producing an enhanced intrinsic polarizer of the present invention involves using a higher initial stretch of the polymeric sheet along with a higher stretching temperature. An additional extension step may or may not be employed. In addition, a higher boration temperature may also be used before, during, or after the optional extension step.

The manufacture of an enhanced intrinsic polarizing sheet typically begins with a polymeric sheet of a hydroxylated linear high polymer having an original length, and generally having a thickness on the order of 0.001 inches (0.025 mm) to 0.004 inches (0.102 mm). A suitable stretching device or other similar mechanism or system may be used to initially stretch the polymeric sheet from greater than 5.0 times to about 7.0 times the original length of the polymeric sheet, . The stretching step is conducted at a temperature above the glass transition temperature of the polymeric material, and preferably at a temperature greater than 300°F. Stretching may be effected by the provision of heat generating elements, fast rollers, and slow rollers. For example, the difference in the rotational rate between rollers may be exploited to create corresponding tension in the area of the sheet transported therebetween. When heat generating elements heat the sheet, stretching is facilitated and more desirably effected. Temperature control may be achieved by controlling the temperature of heated rolls or by controlling the addition of radiant energy, e.g., using infrared lamps, as is known in the art. A combination of temperature control methods may be utilized.

The film may be stretched in the machine direction, as with a length orienter, along its width using a tenter, or at diagonal angles. Due to the relative weak transverse strength of an oriented vinylalcohol polymer, it may be advantageous to cast, laminate or otherwise affix the polymeric sheet onto a substrate such as a support film layer, heated roller, or carrier web, before or after orientation. A support layer, when bonded or otherwise affixed to the polymer film provides mechanical strength and support to the article so it may be more easily handled and further processed. Useful methods of orientation are known in the art, and reference may be made to U.S. Pat. No. 5,973,834 (Kadaba et al.), U.S. Pat. No. 5,666,223 (Bennett et al.) and U.S. Pat. No. 4,895,769 (Land et al.).

It will be understood, however, that in unidirectional orientation, the polymeric sheet may be restrained from shrinking in the lateral direction by means of a tenter apparatus, and such restraint does impose a small degree of bidirectional orientation to the film. If desired, the support layer may be oriented in a direction substantially transverse to the direction of orientation of the polymeric sheet. By substantially transverse, it is meant that the support layer may be oriented in a direction $\pm 45°$ from the direction of orientation of the vinylalcohol polymer film layer. Such orientation of the support layer provides greater strength in the transverse direction than does an unoriented support layer.

In practice, the support layer may be oriented before or after affixing to the vinylalcohol polymer layer. In one embodiment, the vinylalcohol polymer may be oriented substantially uniaxially and bonded to an oriented support layer so that the directions of the orientations of the two layers are substantially transverse. In another embodiment, the support layer may be oriented in a first direction, the vinylalcohol polymer bonded or coated thereon, and the composite article oriented in a second direction substantially transverse to the direction of first orientation. In this embodiment, the resulting article comprises a bidirectionally oriented support layer and a substantially unidirectionally oriented vinylalcohol polymer layer.

Either before or after bonding to the optional support layer, the polymeric sheet is subjected to a dehydration step. The dehydration step may be prior to, subsequent to, or during the stretching step, whereupon the sheet is treated to "convert" a portion thereof to polarizing molecules consisting of block copolymers of poly(vinylene-co-vinyl alcohol). The dehydration step is achieved by exposing the sheet to a suitable dehydration catalyst, such as fuming acid vapors, followed by heating the polymeric sheet and the catalyst at a temperature appropriate to effect partial dehydration, typically in excess of 125°C. In one embodiment, the polymeric sheet is maintained a short distance from a vat of fuming acid for a period of approximately twenty seconds to one minute. With the acid fumes acting as a catalyst, the oriented sheet is then passed through a heating oven where it is subjected to a temperature of from approximately 250°F to 350°F for about one-half minute or longer, whereby the oriented sheet is "converted" into the desired dehydration product, polyvinylene. The desired degree of dehydration may vary, depending on the desired contrast and the film thickness, but is typically in the range of 0.1 to 10%, preferably 1 to 5%, of the available hydroxyl groups are converted to vinylene groups,

i.e., $-CH_2-CHOH- \rightarrow -CH=CH-$.

It will be apparent to those of ordinary skill in the art that the dehydration step may also be achieved by other methods, such as by coating the oriented sheet with an acid coating and then subjecting it to a heating step to effect the dehydration of the polymeric sheet, or by coating the oriented sheet with an acid donor layer wherein a photoacid generator or a thermal acid generator is dissolved or dispersed in the donor layer and upon irradiation with a radiant energy the incipient acid diffuses into the adjacent vinylalcohol polymer matrix to effect partial dehydration of the vinylalcohol polymer to conjugated vinylene [poly(acetylene)] segments. The radiant energy may be thermal energy or ultraviolet light energy, depending on the type of acid generator used.

The temperature and duration of the dehydration heating step can affect the optical properties of the finished polarizer. Considerable latitude in process parameters exists without detriment to the formation of the copolymer and its concomitant polarization properties. It will be understood that there is a balance between time, temperature and concentration of the acid for a given optical property. For example, the extent of penetration of acid fumes into the sheet may be controlled by altering the temperature of the acid in the vat, altering the time of exposure of the sheet to the fumes, and/or altering the temperature of a heating element positioned adjacent to the sheet. Useful temperatures are in the range of 90°C to about 175°C and times of exposure range from a few seconds to about five minutes. For example, a lower transmission polarizer may be achieved at a given temperature by using longer exposure times. At a given exposure time, lower transmission may by achieved at higher temperatures. Generally, if a high transmission polarizer is desired, shorter residence time over the tank and lower oven temperatures are preferred. If a lower transmission polarizer is desired then higher heating temperatures may be used.

The polymeric sheet is then optionally subjected to a second orientation step or extension step in which the oriented polarizer is stretched a second time from 0% to about 70% beyond the length obtained in the first stretch. The polymeric sheet is also subjected to a boration step in which the oriented sheet is treated for example with an aqueous boration solution to effect relaxation and cross-linking. The extension step may be carried out before, during, or after the polymeric sheet is in the boration solution. For example, the polymeric sheet may be submerged and allowed to soften and/or swell, i.e., relax, in the boration solution, subsequently removed, and then extended. Alternatively, the polymeric sheet may be extended when still submerged in the boration solution.

The boration step may employ one or more baths. For example, in a two-bath boration treatment, the first bath may contain water, and the second bath may contain a boric ion contributing species. Alternatively, the order can be

reversed or one or more baths may contain varying concentrations and/or mixtures of boric ion contributing species. Extension may be conducted in any one or more of these baths.

When the polymeric sheet is borated, the boration solution will generally comprise boric acid and either sodium or potassium hydroxide, or a substance from the class consisting of the sodium and potassium borates, preferably borax. The concentration of boric acid and borax or other borate in the solution or solutions to which the oriented polarizing sheet is subjected is not critical. Preferably, the boric acid is present in a higher concentration than the borax or other borate, and the solutions may contain from 0% to about 7% by weight of borax and from about 5% to about 20% by weight of boric acid. A preferred concentration ranges from about 9%-16% by weight of boric acid and from 0%-3% by weight of borax.

The polarizing sheets, films, or rolls are imbibed in these solutions for a period of about one to about twelve minutes, and preferably maintained at about 80°C or higher. A preferred boration temperature ranges from about 80°C to about 110°C. Boration of the molecularly oriented polymeric sheet is subject to considerable variation. For example, the temperature of the boration solution may be varied, and the concentration thereof may be increased at higher temperatures. The solution is heated to at least 80°C or greater in order to accomplish rapid "swelling" and cross-linking of the sheet.

One or more dichroic dyes may additionally be added to the polymeric sheet in order to neutralize the so-called "blue-leak" and/or "red-leak" of certain dichroic polarizers: Any of a variety of dichroic dyes may be used. Suitable dyes include any of the diazo, triazo or polyazo dyes, or other direct or acid dyes, such as "Intrajet Yellow DG" available from Sensient Technical Colors (Elmwood Park, NJ) and "Evans Blue" available from Sigma-Aldrich. The dichroic dye may be added to the polymeric sheet at any stage in the process. For example, the dye may be cast into or coated onto the polymeric sheet before the initial stretch, or it may be added during the dehydration, boration, or extension step. A variety of time, temperatures, and concentrations may be used depending on the amount of stain required. Higher temperatures and/or higher concentrations may require less residence time for the polymeric sheet. Useful operating temperatures are from about room temperature to the boration temperature (about 80°C or greater). For a dichroic yellow dye, a preferred concentration ranges from about 50 ppm to about 600 ppm for a temperature of about 135°F and a residence time of about 1 min. to about 5 min. For a dichroic blue die, a preferred concentration ranges from about 0.1% to about 3% wt/wt for a temperature range of about room temperature to about 135°F and a residence time of about 30 seconds to about 5 min. The dichroic dye may be placed in an aqueous boric acid solution or in a separate aqueous solution.

Subsequent to the extension step and/or boration step, the resulting enhanced intrinsic polarizer may again be bonded or laminated to an optional support layer, the support layer being the same or different from the layer stripped off, fumed, and/or oriented prior to extension thereof.

FIG. 1 shows the absorbance versus the wavelength for two intrinsic polarizing sheets initially stretched at 4.0 times and 5.0 times the original length, designated "4.0X", and "5.0X", respectively, and two polarizing sheets made according to an embodiment of the present invention initially stretched at 6.0 times and 6.5 times the original length, designated "6.0X" and "6.5X", respectively. The conditions for making the polarizers are summarized in Table 1.

Table 1

| | 4.0X | 5.0X | 6.0X | 6.5X |
|---|---|---|---|---|
| Stretching Amount (x Original Length) | 4.0 | 5.0 | 6.0 | 6.5 |
| Stretch Temperature (°F) | 275 | 320 | 360 | 360 |
| Boration Temperature (°F) | 154 | 175 | 180 | 190 |
| Extension (%) | None | 10 | 3 | <1 |
| Boration Concentration (%boric acid/%borax) | 9/3 | 12/3 | 12/3 | 12/3 |

As shown in FIG. 1, the absorbance by the chromophores in each of the polarizers made according to an embodiment of the present invention is substantially larger than the absorbance by the corresponding chromophores in the representative prior art intrinsic polarizer, and particularly so for the chromophores contributing to the polarizing properties in the near-red wavelengths of 600 nm to 700 nm.

The polarizers made according to an embodiment of the present preferably also have invention absorption values that define a concentration distribution of oriented chromophoric moieties, i.e., the conjugated blocks, that is substantially uniform throughout wavelengths ranging from about 200 nm to about 700 nm, which results in a visually observable and highly desirable neutral gray tone in addition to improving polarizing properties. Table 2 shows the comparably uniform or "balanced" chromophoric concentration distribution for a polarizer made according to an embodiment of the present invention, designated "New KE", compared to two prior art K-type polarizers, designated "KE" and "KN", at a transmittance, $K_v$, of 42%.

| Conjugation Length (n) | Wavelength (nm) | Absorbance New KE | Relative Conc. | Absorbance KE | Relative Cone. | Absorbance KN | Relative Conc. |
|---|---|---|---|---|---|---|---|
| 2 | 233 | 0.4261 | | 0.3429 | | 0.3768 | |
| 3 | 276 | 0.3821 | | 0.3174 | | 0.3294 | |
| 4 | 309 | 0.3794 | | 0.3282 | | 0.3175 | |
| 5 | 339 | 0.3858 | | 0.3496 | | 0.3305 | |
| 6 | 372 | 0.3874 | | 0.3647 | | 0.3482 | |
| 7 | 394 | 0.3906 | | 0.3752 | | 0.3656 | |
| 8 | 420 | 0.3813 | | 0.3709 | | 0.3662 | |
| 9 | 445 | 0.3699 | | 0.3632 | | 0.3640 | |
| 10 | 472 | 0.3628 | | 0.3554 | | 0.3599 | |
| 11 | 492 | 0.3592 | | 0.3501 | | 0.3574 | |
| 12 | 512 | 0.3586 | | 0.3469 | | 0.3542 | |
| 13 | 527 | 0.3556 | | 0.3440 | | 0.3507 | |
| 14 | 543 | 0.3535 | | 0.3408 | | 0.3470 | |
| 15 | 557 | 0.3539 | | 0.3382 | | 0.3431 | |
| 16 | 571 | 0.3525 | 99.6% | 0.3352 | 99.1% | 0.3385 | 98.7% |
| 17 | 584 | 0.3490 | 98.6% | 0.3324 | 98.3% | 0.3327 | 97.0% |
| 18 | 595 | 0.3468 | 98.0% | 0.3298 | 97.5% | 0.3278 | 95.5% |
| 19 | 622 | 0.3387 | 95.7% | 0.3226 | 95.4% | 0.3089 | 90.0% |
| 20 | 637 | 0.3343 | 94.5% | 0.3182 | 94.1% | 0.2952 | 86.0% |
| 21 | 652 | 0.3270 | 92.4% | 0.3112 | 92.0% | 0.2714 | 79.1% |
| 22 | 667 | 0.3178 | 89.8% | 0.3008 | 88.9% | 0.2391 | 69.7% |
| 23 | 681 | 0.3109 | 87.9% | 0.2863 | 84.7% | 0.2028 | 59.1% |
| 24 | 695 | 0.3007 | 85.0% | 0.2519 | 74.5% | 0.1497 | 43.6% |
| 25 | 709 | 0.2363 | 66.8% | 0.1763 | 52.1% | 0.0904 | 26.4% |
| 26 | 728 | 0.1214 | 34.3% | 0.1180 | 34.9% | 0.0503 | 14.6% |
| 27 | 743 | 0.0763 | 21.5% | 0.0750 | 22.2% | 0.0341 | 9.9% |
| 28 | 759 | 0.0368 | 10.4% | 0.0430 | 12.7% | 0.0262 | 7.6% |
| 29 | 774 | 0.0245 | 6.9% | 0.0260 | 7.7% | 0.0228 | 6.6% |
| 30 | 789 | 0.0090 | 2.5% | 0.0090 | 2.7% | 0.0143 | 4.2% |

Table 2

The conditions for making the polarizers are summarized in Table 3.

Table 3

| | New KE | KE | KN |
|---|---|---|---|
| Stretching Amount (x Original Length) | 6.0 | 4.5 | 3.6-3.9 |
| Stretch Temperature (°F) | 360 | 275 | 250 |
| Boration Temperature (°F) | 180 | 160-165 | 145 |
| Extension (%) | 1 | 25 | None |
| Boration Concentration (%boric acid/%borax) | 12/3 | 9/3 | 9/3 |

FIG. 2 is a graphical representation of the data in Table 2 with the absorbance plotted relative to the conjugation length. As shown in Table 2 and FIG. 2, the concentration of each of the polyvinylene blocks remains substantially constant as determined by the absorption by said blocks over the wavelengths ranging from about 250 nm to about 700 nm. Moreover, it will be particularly noted that the absorption-determined concentration of each of said polyvinylene blocks in the range of n=19 to 25 is not less than approximately 65% of the absorption-determined concentration of any of said polyvinylene blocks in the range of n=14 to 15. In this regard, each of the chromophores responsible for the polarizing properties in the near-red wavelength, i.e., n=19 to 25, has a relative concentration, based on the measure of its absorbance, that is no less than approximately 65% of the measured value for the chromophores responsible for polarization of wavelengths corresponding to the greatest human photopic sensitivity, i.e., 540 nm to 560 nm, n=14 to 15.

In the table above, relative concentration is calculated as follows:

$$\text{Rel. Conc.}_{(n=x)} = (\text{Absorption}_{(n=x)} / \text{Absorption}_{(n=q)}) \times 100$$

wherein x is a conjugation length, n, of 16 to 30, and q is a conjugation length, n, of 14 or 15. In the above table, for purposes of illustration q is 14. Calculated values would be comparable where q is 15.

As evident from Table 2, the chromophoric distribution of the polarizing sheet made according to an embodiment of the present invention departs from that observed in the prior art intrinsic polarizers, particularly for conjugation lengths 23 to 25, which may contribute to the so-called phenomenon of "red-leak". Aside from diminished optical properties, polarizers manifesting "red-leak" tend to have a brownish cast, which is undesirable for certain display applications from the standpoint of aesthetics.

A polarizer made according to an embodiment of the present invention preferably has a degree of orientation of the molecules in conjunction with the concentration distribution of each polyvinylene block which results in a polarizing sheet having a photopic dichroic ratio ($R_D$) of at least 75.

In addition to a single polarizing sheet, such as described above, a pair of polarizers made according to the present invention may be positioned with their respective polarizing axes crossed (also referred to as a "crossed polarizer"). In this case, polarized light passing through the first polarizer of the pair can be "twisted" out of alignment with the polarizing axis of the second polarizer, thus blocking the transmission of light therethrough.

FIG. 3 and FIG. 4 show the percent light transmission and absorbance for two prior art crossed polarizers, designated "4X" and "5X", compared to a crossed polarizer made according to an embodiment of the present invention, designated "6X", for a transmittance, $K_v$, of 42%. The conditions for preparing the sheets of the crossed polarizers are summarized in Table 4.

Table 4

| | 4X | 5X | 6X |
|---|---|---|---|
| Stretching Amount (x Original Length) | 4.0 | 5.0 | 6.0 |
| Stretch Temperature (°F) | 275 | 320 | 360 |
| Boration Temperature (°F) | 160-165 | 165 | 180 |
| Extension (%) | 25 | <1 | 6 |

The transmittance was also determined using a UV/VIS spectrophotometer. As shown in FIG. 3 and FIG. 4, for a given transmittance, a crossed polarizer made according to the present invention provides a significant improvement in light absorption (reduced transmission) in the blue spectral region, i.e., 400 nm, and the red spectral region, i.e., 700

nm. In particular, the ratio of absorbance$_{(550\ nm)}$ to absorbance$_{(700\ nm)}$ is less than 3.75 for any given transmittance, $K_v$. The absorbance at 550 nm corresponding to the wavelength at which there is the greatest human photopic sensitivity.

FIG. 5 and FIG. 6 show the absorbance and the spectral dichroic ratio, respectively, for a polarizing sheet prepared with and without a dichroic yellow dye. The polarizing sheets were initially stretched 5.0 times the original length at a 320°F stretching temperature and a 173°F - 179°F boration temperature with an additional 10% extension stretch. As shown in FIG. 5, the incorporation of a yellow dye into an intrinsic polarizer results in a significant increase in light absorption in the blue spectral region ($A_z$ spectrum) without a similar increase in the $A_y$ or transmissive component. As shown in FIG. 6, the incorporation of a yellow dye into an intrinsic polarizer also results in an improvement in the spectral dichroic ratio especially in the blue spectral region.

Polarizing sheets prepared as described above with and without a dichroic yellow dye were used to form crossed polarizers. FIG. 7 shows the percent transmission versus wavelength for the resulting polarizers. An intrinsic polarizer with dye has substantially reduced leakage of blue light in the crossed polarizer state. A colorimetry measurement was made for a single polarizing sheet and crossed polarizing sheets for an intrinsic polarizer made with a dichroic yellow dye (samples 1-5) and made without a dichroic yellow dye (control sample). An Illuminant C common light source was used for the colorimetry measurements. As will be apparent to one skilled in the art, the a* value represents a color measurement on a red/green axis and the b* value represents a color measurement on a blue/yellow axis. On this type of color measurement system a neutral color, such as white or black, measures a value of zero.

Table 5

| Sample | Hue | | | |
|---|---|---|---|---|
| | Single | | Crossed | |
| | a* | b* | a* | b* |
| Control | 0.6576 | 1.1946 | 9.4201 | -12.5171 |
| 1 | -1.9995 | 6.976 | 1.0743 | 0.4928 |
| 2 | -1.257 | 5.3589 | 1.1376 | 0.4152 |
| 3 | -0.4683 | 3.7342 | 1.2473 | 0.1485 |
| 4 | -0.03694 | 3.7804 | 1.039 | 0.0076 |
| 5 | -0.1638 | 3.1442 | 1.5398 | -0.4191 |

As shown in Table 5, the color of the crossed polarizer changes from a dark, blue black (control sample) to a true neutral black (samples 1-5) with the addition of the dichroic yellow dye, though the single sheet color remains nearly indistinguishable from the polarizing sheet prepared without a dichroic yellow dye.

FIG. 8 shows the absorbance for polarizing sheets prepared with and without a blue dichroic dye. The polarizing sheets were prepared in the same manner as described for the dichroic yellow dye samples. As shown in FIG. 8, the incorporation of a blue dye into a K polarizer made according to the present invention results in a significant increase in light absorption in the red spectral region ($A_z$ spectrum) with only a minor increase in the $A_y$ or transmissive component.

The present invention is described herein using polymeric sheets derived from molecularly oriented polyvinyl alcohol. Vinylalcohol polymers include any linear 1,3-polyhydroxylated polymer or copolymer, or derivative thereof that may be dehydrated to a linear, conjugated vinylic polymer. Useful vinylalcohol polymers include polymers and copolymers of units of the formula:

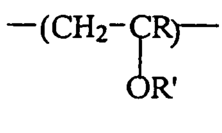

wherein R is H, a $C_1$-$C_8$ alkyl, or an aryl group; and R' is H, or a hydrolysable functional group such as a $C_1$-$C_8$ acyl group. Preferably, R and R' are H. In addition to poly(vinyl alcohol) polymers and copolymers, polyvinyl acetals and ketals and esters as materials from which the molecularly oriented sheet or film can be formed. Useful co-monomers that may be polymerized with the vinylalcohol monomers to produce vinylalcohol copolymers may include any free-radically polymerizable monomers including olefins, such as ethylene, propylene and butylene, acrylates and methacrylates such as methyl (meth)acrylate, vinyl acetates and styrenes. Specifically contemplated for use in the present invention are copolymers of ethylene and vinylalcohol. Generally, the amount of co-monomer is less than 30 mole% and is preferably less than 10 mole%. Higher amounts may retard the formation of conjugated vinylene blocks (poly (acetylene) blocks) and deleteriously affect the performance of the polarizer.

The preferred vinylalcohol polymers are homo- and copolymers of polyvinyl alcohol. Most preferred are polyvinyl

alcohol homopolymers. Commercially available polyvinyl alcohols, such as those available from Celanese Chemicals, Inc., Dallas, TX., under the tradename CELVOL, are classified by viscosity and percent hydrolysis. Polyvinyl alcohols having low viscosities are preferred for ease of coating, while having a sufficiently high molecular weight to provide adequate moisture resistance and good mechanical properties.

Melt-processible polyvinyl alcohol may also be used in this invention. The melt processible vinylalcohol polymers are plasticized to enhance their thermal stability and allow them to be extruded or melt-processed. The plasticizer can be added externally or in the vinylalcohol polymer chain, i.e., the plasticizer is polymerized or grafted onto the vinylalcohol polymer backbone.

Vinylalcohol polymers that can be externally plasticized include commercially available products such as "Mowiol" 26-88 and "Mowiol" 23-88 vinylalcohol polymer resin available from Clariant Corp., Charlotte, N.C. These "Mowiol" vinylalcohol polymer resins have a degree of hydrolysis of 88%. "Mowiol" 26-88 vinylalcohol polymer resin has a degree polymerization of 2100 and a molecular weight of about 103,000.

Plasticizers useful in externally plasticizing vinylalcohol polymer are high boiling, water-soluble, organic compounds having hydroxyl groups. Examples of such compounds include glycerol, polyethylene glycols such as triethylene glycol and diethylene glycol, trimethylol propane, and combinations thereof. Water is also useful as a plasticizer. The amount of plasticizer to be added varies with the molecular weight of the vinylalcohol polymer. In general, the plasticizer will be added in amounts of between about 5% to about 30%, and preferably between about 7% to about 25%. Lower molecular weight vinylalcohol polymers typically require less plasticizer than higher molecular weight vinylalcohol polymers. Other additives for compounding externally plasticized vinylalcohol polymers include processing aids, i.e. Mowilith DS resin from Hoechst A.G., colorants, anti-blocking agents, i.e., stearic acid, hydrophobic silica, and the like.

Externally plasticized vinylalcohol polymers are compounded by slowly adding the organic plasticizer and typically water to the vinylalcohol polymer powder or pellets under constant mixing until the plasticizer is incorporated into the vinylalcohol polymer, which occurs when the batch reaches a temperature of from about 82°C (180°F) to about 121°C (250°F). The lower the molecular weight of the vinylalcohol polymer resin, the lower the maximum batch temperature required to incorporate the plasticizer. The batch is held at that temperature for about 5 to 6 minutes. The batch is then cooled to about between 71°C (160°F) and 93°C (200°F) at which time an antiblocking agent can be added. The batch is further cooled to about 66°C (150°F) at which time the vinylalcohol polymer granulates can be removed from the mixer and extruded.

The compounding steps used to externally plasticize the vinylalcohol polymer can be eliminated when an internally plasticized vinylalcohol polymer is made, except where it is desirable to add colorants, etc. Useful internally plasticized vinylalcohol polymers are commercially available. Such products include "Vinex" 2034 and "Vinex" 2025, both available from Air Products, Inc.

The Vinex trademark from Celanese represents a unique family of thermoplastic, water-soluble, polyvinylalcohol resins. Specifically, the "Vinex" 2000 series including "Vinex" 2034 and "Vinex" 2025 represent internally plasticized cold and hot water soluble polyvinylalcohol copolymer resins. Such internally plasticized vinylalcohol copolymers are described in U.S. Pat. No. 4,948,857 herein incorporated by reference. Such copolymers have the following general formula:

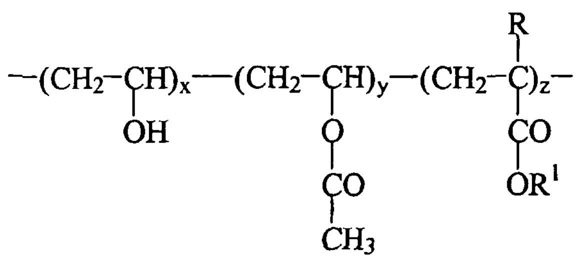

(I)

where R is hydrogen or methyl;
$R^1$ is a $C_6$ -$C_{18}$ acyl group
y is 0 to 30 mole%;
z is 0.5 to 8 mole%; and
x is 70 to 99.5 mole%.

These copolymers retain the strength properties of poly(vinylalcohol) while also exhibiting increased flexibility. The acrylate monomer represented in the above formula gives the copolymer its internal plasticization effect. The degree of polymerization of the copolymers can range from about 100 up to about 4000, but is preferably between about 2000 and 4000. The degree of polymerization is defined as the ratio of molecular weight of the total polymer to the molecular weight of the unit as referenced in formula I. Other internally plasticized poly(vinylalcohol) copolymer resins and preparation of these resins are discussed in U.S. Pat. No. 4,772,663. "VINEX" 2034 resin has a melt index typically of about 8.0 g/10 mins and a glass transition temperature of about 30°C (86°F). "VINEX" 2025 resin has a melt index typically of 24 g/10 mins and a glass transition temperature of about 29°C (84°F).

Polyvinyl alcohols and copolymers thereof, are commercially available with varying degrees of hydrolysis, e.g., from about 50% to 99.5+%. Preferred polyvinyl alcohols have a degree of hydrolysis from about 80% to 99%. In general, the higher the degree of hydrolysis, the better the polarizer properties. Also, polyvinyl alcohols with a higher degree of hydrolysis have better moisture resistance. Higher molecular weight polyvinyl alcohols also have better moisture resistance, but increased viscosity. In the practice of the invention, it is desirable to find a balance of properties in which the polyvinyl alcohol has sufficient moisture resistance, can be handled easily in a coating or casting process and can be readily oriented. Most commercial grades of poly(vinylalcohol) contain several percent residual water and unhydrolyzed poly(vinyl acetate).

Coating of the dispersion/solution may be accomplished by a variety of known methods, including, for example, coating the substrate using techniques, such as shoe coating, extrusion coating, roll coating, curtain coating, knife coating, die coating, and the like, or any other coating method capable of providing a uniform coating. The substrate may be coated with a primer or treated with a corona discharge to help anchor the polyvinyl alcohol film to the substrate. Suitable solution based primers are water-soluble copolyesters commonly used for priming polyethylene terephthalate films such as described in U.S. Pat. No. 4,659,523. After coating, the polyvinyl alcohol film is dried at a temperature typically from about 100°C to 150°C. The thickness of the dried coating may vary depending on the optical characteristics desired but is typically from about 25 μm to 125 μm (1-5 mils).

Alternatively, the vinylalcohol polymer layer may be melt-processed. As with solution coating, a melt comprising the vinylalcohol may be cast onto a substrate such as a carrier web or support layer. The vinylalcohol polymer film may also be melt-blown. The vinylalcohol polymer melt may also be coextruded with the substrate using a variety of equipment and a number of melt-processing techniques, typically, extrusion techniques, well known in the art. For example, single- or multi-manifold dies, full moon feedblocks, or other types of melt processing equipment can be used, depending on the types of materials extruded.

Any of a variety of materials can be used for the carrier web or support layer. Suitable materials include known polymeric sheet materials such as the cellulose esters, e.g., nitrocellulose, cellulose acetate, cellulose acetate butyrate, polyesters, polycarbonates, vinyl polymers such as the acrylics, and other support materials that can be provided in a sheet-like, light-transmissive form. Polyesters are especially useful, depending on the particular application and the requirements thereof. A preferred polyester is polyethylene terephthalate, available under the Mylar and Estar tradenames, although other polyethylene terephthalate materials can be employed. The thickness of the support material will vary with the particular application. In general, from the standpoint of manufacturing considerations, supports having a thickness of about 0.5 mil (0.013 mm) to about 20 mils (0.51 mm) can be conveniently employed.

It will be apparent to those of ordinary skill in the art that light polarizing sheets embodying the product made according to the present invention may be laminated between or to supporting sheets or films, such as sheets of glass or sheets of other organic plastic materials, and that light polarizers of the present invention either in laminated or unlaminated form may be employed wherever other forms of light-polarizing plastic materials have been used, for example, in connection with sunglasses, sun visors, window pane glass, glare masks, room partitions, and display devices such as liquid crystal display panels, emissive display devices, cathode ray tubes, or advertising displays.

Any of a variety of adhesives can be used for laminating the polarizing sheets onto other layers or substrates including polyvinyl alcohol adhesives and polyurethane adhesive materials. Inasmuch as the polarizer will normally be employed in optical applications, an adhesive material which does not have an unacceptable affect on the light transmission properties of the polarizer will generally be employed. The thickness of the adhesive material will vary with the particular application. In general, thicknesses of about 0.20 mil (0.005 mm) to about 1.0 mil (0.025 mm) are satisfactory.

The product made according to the present invention is especially useful as a light-polarizing filter in display devices where the filter is positioned closely adjacent a relatively intense source of illumination which remains lighted continuously for long periods. Under these circumstances the polarizing filter may be subjected to temperatures in the neighborhood of 125°F or even higher for protracted periods. A polarizer made according to the present invention shows no unacceptable loss in its high-efficiency polarizing properties, no discoloration, and no darkening after such protracted exposure to heat.

To further illustrate the present invention, the following Examples are provided, but the present invention is not to be construed as being limited thereto. Unless otherwise indicated, all parts, percents and ratios are by weight, In the Examples, the polarizing efficiency was calculated according to the following equation by determining the transmittance with axes parallel ($T_{par}$) which was determined by overlapping the sample polarizer with the high efficiency polarization analyzer in such a manner as to make the axes thereof parallel with each other, and the transmittance with axes crossed ($T_{perp}$), which was determined by overlapping the same in such a manner as to make the axes at right angles to each other:

$$\text{Polarizing efficiency (\%)} = (T_{par} - T_{perp})/(T_{par} + T_{perp}) \times 100$$

The ideal sets of maximum values of transmittance and polarizing efficiency of a polarizing film are 50% and 100%, respectively.

Unless otherwise indicated, all Examples used an aqueous boration solution having a 9%-12% boric acid concentration and a 3% borax concentration, and a polyvinyl alcohol film having a degree of polymerization of about 2600.

## Examples

Reference Examples 1-5

Sheets approximately 2 mils thick of a high molecular weight polyvinyl alcohol (98.0% or greater hydrolysis) were unidirectionally stretched 5.0 times the original length of the sheets at three different stretching temperatures, 240°F, 275°F, and 320°F. The stretched sheets were then exposed to fuming hydrochloric acid vapors and heated to 325°F to 350°F. Subsequently, the sheets were immersed in an aqueous solution of boric acid and borax at a temperature of 166°F. Upon removal from the solution, the sheets were unidirectionally extended an additional 10% to 15% such that the final degree of stretch for each sheet was 5.5 to 5.7 times the original length. FIG. 9 shows the efficiency versus the transmittance, $K_v$, for the resulting polarizers at the three different stretching temperatures. Table 6 compares the properties of the polarizers for a given polarizing efficiency.

Table 6

| | Ex. 1 | Ex. 2 | Ex. 3 | Ex.4 | Ex. 5 |
|---|---|---|---|---|---|
| Transmittance, $K_v$ (%) | 41.2 | 42.1 | 42.1 | 42.7 | 42.7 |
| Polarizing Efficiency (%) | 99.82 | 99.83 | 99.82 | 99.83 | 99.83 |
| Photopic Dichroic Ratio, $R_D$ | 63.8 | 79 | 77.4 | 94 | 93.6 |
| Stretch Temperature (°F) | 240 | 275 | 275 | 320 | 320 |
| Extension (%) | 10 | 15 | 10 | 15 | 10 |

As evident from FIG. 9 and Table 6, the transmittance, $K_v$, and photopic dichroic ratio, $R_D$, improve as the stretching temperature increases. However, varying the amount of subsequent extension appears to have a smaller effect on the polarizing properties of the sheets than the increase in stretching temperature.

Reference Examples 6-9

Sheets of polyvinyl alcohol were unidirectionally stretched 5.0 times the original length of the sheets at a stretching temperature of 275°F for three of the samples and 320°F for one sample. The sheets were then processed in a manner similar to Examples 1 - 5 except three different boration temperatures were used for the aqueous solution of boric acid and borax, 154°F, 165°F, and 180°F. FIG. 10 shows the efficiency versus the transmittance, $K_v$, for the resulting polarizers at the three different boration temperatures. Table 7 compares the properties of the polarizers for a given polarizing efficiency.

Table 7

| | Ex.6 | Ex.7 | Ex.8 | Ex.9 |
|---|---|---|---|---|
| Transmittance, $K_v$ (%) | 41.4 | 42.2 | 42.1 | 42.5 |
| Polarizing Efficiency (%) | 99.79 | 99.82 | 99.82 | 99.87 |
| Photopic Dichroic Ratio, $R_D$ | 65.2 | 79.5 | 77.4 | 90.6 |
| Boration Temperature (°F) | 154 | 166 | 166 | 180 |
| Extension (%) | 10 | 15 | 10 | 10 |
| Stretching Temperature (°F) | 275 | 275 | 275 | 320 |

As evident from FIG. 10 and Table 7, transmittance, $K_v$, and photopic dichroic ratio, $R_D$, improve as the boration temperature increases. This means for a given efficiency the transmittance and dichroic ratio increase, thus producing a brighter polarizer. Again, varying the amount of subsequent extension appears to have a smaller effect on the polarizing

properties of the sheets than the increase in boration temperature.

Examples 10-15

Sheets of polyvinyl alcohol were unidirectionally stretched 5.5 times and 6.5 times the original length of the sheets at a stretching temperature of 360°F. The sheets were then processed in a manner similar to Examples 1 - 5 except the residence time in the boration solution was varied for three different boration temperatures, 82°C (180°F), 95°C (203°F), and 101°C (214°F). The sheets were not subjected to a further extension beyond the initially obtained stretched length, i.e., 0% extension. FIG. 11 and FIG. 12 show the photopic dichroic ratio versus the residence time in the boration solution for the two different stretching amounts. FIG. 13 shows the maximum photopic dichroic ratio obtained for the resulting polarizers at the two different stretching amounts and the three different boration temperatures. As evident from FIG. 11 - FIG. 13, photopic dichroic ratio, $R_D$, improves as the boration temperature increases and the residence time in the boration solution increases. However, a maximum photopic dichroic ratio was observed for some samples where increasing the residence time in the boration solution resulted in no further improvement in photopic dichroic ratio.

Examples 16-19 (Example 16 is a Reference Example)

Sheets of polyvinyl alcohol were unidirectionally stretched 5.0 times, 6.0 times, and 6.5 times the original length of the sheets at a stretching temperature of 360°F. The sheets were then processed in a manner similar to Examples 1 - 5 except the boration temperature was varied from 180°F to 190°F and the percent of extension was varied from about 1% to about 10%. FIG. 14 shows the efficiency versus the transmittance, $K_v$, for the resulting polarizers at the different processing parameters. Table 8 compares the properties of the polarizers for a given polarizing efficiency.

Table 8

| | Ex. 16 | Ex. 17 | Ex. 18 | Ex. 19 |
|---|---|---|---|---|
| Transmittance, $K_v$ (%) | 41.7 | 42.3 | 42.3 | 42.5 |
| Polarizing Efficiency (%) | 99.90 | 99.90 | 99.90 | 99.90 |
| Photopic Dichroic Ratio, $R_D$ | 77.7 | 88.3 | 97.1 | 93.3 |
| Boration Temperature (°F) | 180 | 180 | 190 | 190 |
| Stretching Amount ( x Original Length) | 5 | 6 | 6 | 6.5 |
| Extension (%) | 10 | 6 | <1 | <1 |

As evident from FIG. 14 and Table 8, transmittance, $K_v$, and photopic dichroic ratio, $R_D$, for a given polarizing efficiency improve as the initial stretching increases. As shown, improved polarizing properties can be obtained over a range of boration temperatures and with or without a subsequent extension step.

Reference Examples 20-25

Sheets of polyvinyl alcohol were unidirectionally stretched 5.0 times the original length of the sheets at a stretching temperature of 320°F. The stretched sheets were then exposed to fuming hydrochloric acid vapors and heated to 325°F to 350°F. The dehydrated sheets were delaminated from its plastic support and dipped into an aqueous boration solution containing 80 ppm of dichroic yellow dye for approximately 2-4 minutes at 135°F. The control sample was not subjected to the boration solution with the dye and simply proceeded to the next step. The sheets were then immersed in a separate boration solution at a temperature of 175°F. Finally, the sheets were unidirectionally extended an additional 15% such that the final degree of stretch for each sheet was 5.7 times the original length. Table 9 shows the polarization efficiency and transmittance for the resulting samples.

Table 9

| | Ex. 20 (Control) | Ex. 21 | Ex. 22 | Ex. 23 | Ex. 24 | Ex. 25 |
|---|---|---|---|---|---|---|
| Transmittance, Kv (%) | 42.4 | 42.5 | 42.1 | 42.7 | 42.4 | 42.9 |
| Polarizing Efficiency (%) | 99.83 | 99.83 | 99.81 | 99.82 | 99.9 | 99.82 |

As evident in Table 9 and previously shown in FIG. 5 - FIG. 7, polarizing sheets prepared with a dichroic yellow dye show a significant increase in light absorption in the blue spectral region and a significant reduction of the blue light

leakage without sacrificing polarization properties.

Reference Examples 26-28

Sheets of polyvinyl alcohol were unidirectionally stretched 5.0 times the original length of the sheets at a stretching temperature of 320°F. The stretched sheets were then exposed to fuming hydrochloric acid vapors and heated to 325°F to 350°F. The dehydrated sheets were delaminated from its plastic support and dipped into an aqueous solution containing 1% wt/wt of blue dichroic dye for approximately 1 minute at room temperature. The control sample was not subjected to a similar step and simply proceeded to the next step. The sheets were then immersed in a boration solution for approximately 5 minutes at a temperature of 82°C (180°F). Finally, the sheets were unidirectionally extended an additional 10% such that the final degree of stretch for each sheet was 5.5 times the original length.

As previously shown in FIG. 8, polarizing sheets prepared with a dichroic blue dye show a significant increase in light absorption in the red spectral region ($A_z$ spectrum) without sacrificing polarization properties.

Examples 29 - 30

Sheets of polyvinyl alcohol having a degree of polymerization of 2000 and 4000 were unidirectionally stretched 6.0 times and 5.5 times the original length of the sheets, respectively, at a stretching temperature of 360°F. The stretched sheets were then exposed to fuming hydrochloric acid vapors and heated to 325°F to 350°F. Subsequently, the sheets were immersed in an aqueous solution of boric acid and borax at a temperature of 190°F. Upon removal from the solution, the sheets were unidirectionally extended an additional 10% and 3% of the stretched length, respectively. FIG. 15 shows the efficiency versus the transmittance, $K_v$, for the resulting polarizers at the two different degrees of polymerization. Table 10 compares the properties of the polarizers for a given transmittance.

Table 10

| | Ex. 29 | Ex. 30 |
|---|---|---|
| Transmittance, $K_v$ (%) | 43.0 | 43.0 |
| Polarizing Efficiency (%) | 99.80 | 99.84 |
| Photopic Dichroic Ratio, $R_D$ | 101 | 104 |
| Degree of Polymerization, DP | 2000 | 4000 |
| Stretching Amount ( x Original Length) | 6.0 | 5.5 |
| Extension (%) | 10 | 3 |

As evident from FIG. 15 and Table 10, polarizing efficiency and photopic dichroic ratio, $R_D$, improve for a given transmittance as the degree of polymerization increases. As shown, improved polarizing properties can be obtained even with a smaller initial stretch.

Examples 31-40

Sheets of polyvinyl alcohol were unidirectionally stretched 6.5 times the original length of the sheets at a stretching temperature of 360°F. The sheets were then processed in a manner similar to Examples 1 - 5 except the boration temperature was about 101°C (214°F) and the boration solution concentration was varied. The concentration of boric acid was varied from 0 wt% to about 21 wt% and the concentration of borax was varied from 0 wt% to about 6 wt%. The sheets were not subjected to a further extension beyond the initially obtained stretched length. FIG. 16 shows the photopic dichroic ratio versus the boric acid concentration for the resulting polarizers at the three different borax concentrations.

As evident from the Examples as described herein, demonstrably improved polarizing properties can be obtained by implementing a higher initial stretch at higher stretching temperatures in a K-sheet manufacturing process. However, since certain changes and modifications in the article and method which embody the invention can be made, it is intended that all matter contained in the Examples be considered illustrative and not definitive.

It is to be understood that the herein described embodiments are simply illustrative of the principles of the invention. Various and other modifications, alterations, and variations may be made by those skilled in the art which will embody the principles of the invention.

## Claims

1. A method for making a polarizer from a polymeric sheet having an original length and comprising a hydroxylated linear high polymer, the methods comprising:

   stretching the polymeric sheet to a stretched length of from greater than 5.0 times to about 7.0 times the original length;
   introducing a suitable dehydration catalyst to the polymeric sheet;
   heating the polymeric sheet and the catalyst to effect partial dehydration of the polymeric sheet wherein light absorbing, vinylene block segments are formed; and
   subjecting the polymeric sheet to a boration treatment at an elevated temperature of at least about 80°C.

2. The method of claim 1 further comprising
   unidirectionally extending the stretched and heated polymeric sheet from 0% to about 70% of the stretched length.
   subjecting the polymeric sheet to a boration treatment at an elevated temperature

3. The method of claim any of 1 or 2 , wherein the hydroxylated linear high polymer is polyvinyl alcohol, polyvinyl acetal, polyvinyl ketal, or polyvinyl ester.

4. The method of any of claims 1 to 8, wherein the introducing step comprises exposing the polymeric sheet to fuming acidic vapors.

5. The method of any of claims 1 to 83 wherein the introducing step comprises coating the polymeric sheet with an acid coating.

6. The method of any of claim 1 to 3, wherein the introducing step comprises
   placing an acid donor layer adjacent to the polymeric sheet; and
   exposing the acid donor layer to a radiant energy to release one or more molecules of acid.

7. The method of claim 6, wherein the radiant energy is thermal energy or ultraviolet light energy.

8. The method of any of claims 1 to 87 further comprising
   adding at least one dichroic dye to the polymeric sheet.

9. The method of claim 8, wherein the at least one dichroic dye is a yellow dye, a blue dye, or a combination thereof.

10. The method of claim any of 1 to 9, wherein the boration treatment comprises placing the polymeric sheet in contact with an aqueous solution comprising boric acid.

11. The method of claim 10, wherein the boric acid concentration ranges from about 5 wt% to about 20 wt%.

12. The method of claim 10 or 11, wherein the aqueous solution further comprises borax.

13. The method of claim 12, wherein the borax concentration ranges from 0 wt% to about 7 wt%.

14. The method of any of claims 1 to 13, wherein the boration treatment temperature ranges from about 80°C to about 110°C.

15. The method of any of claims 1 to 14, wherein the polymeric sheet has a degree of polymerization ranging from about 2000 to about 4000.

## Patentansprüche

1. Verfahren zum Herstellen eines Polarisators aus einer Polymerfolie mit einer ursprünglichen Länge und umfassend ein hydroxiliertes lineares Hochpolymer, wobei das Verfahren umfasst:

   Dehnen der Polymerfolie auf eine gedehnte Länge von zwischen mehr als dem 5,0-fachen und etwa dem 7,0-fachen der ursprünglichen Länge;
Einbringen eines geeigneten Dehydrierkatalysators in die Polymerfolie;
Erwärmen der Polymerfolie und des Katalysators, um teilweise Dehydrierung der Polymerfolie zu bewirken, wobei Licht absorbierende Vinylenblocksegmente gebildet werden; und
Unterwerfen der Polymerfolie einer Borierungsbehandlung bei einer erhöhten Temperatur von zumindest etwa 80°C.

**2.** Verfahren nach Anspruch 1, ferner umfassend
unidirektionales Erweitern der gedehnten und erwärmten Polymerfolie von 0% auf etwa 70% der gedehnten Länge.

**3.** Verfahren nach Anspruch 1 oder 2, wobei das hydroxilierte lineare Hochpolymer Polyvinylalkohol, Polyvinylacetat, Polyvinylketal oder Polyvinylester ist.

**4.** Verfahren nach einem der Ansprüche 1 bis 3, wobei der Einbringungsschritt ein in Kontakt Bringen der Polymerfolie mit rauchenden säurehaltigen Dämpfen umfasst.

**5.** Verfahren nach einem der Ansprüche 1 bis 3, wobei der Einbringungsschritt ein Beschichten der Polymerfolie mit einer säurehaltigen Beschichtung umfasst.

**6.** Verfahren nach einem der Ansprüche 1 bis 3, wobei der Einbringungsschritt ein Platzieren einer säurehaltigen Donatorschicht angrenzend an die Polymerfolie und ein in Kontakt Bringen der säurehaltigen Donatorschicht mit einer Strahlungsenergie, um ein oder mehrere Säuremoleküle zu lösen, umfasst.

**7.** Verfahren nach Anspruch 6, wobei die Strahlungsenergie thermische Energie oder UV-Licht Energie ist.

**8.** Verfahren nach einem der Ansprüche 1 bis 7, das ferner Hinzufügen zumindest eines dichromatischen Farbstoffs zu der Polymerfolie umfasst.

**9.** Verfahren nach Anspruch 8, wobei der zumindest eine dichromatische Farbstoff ein gelber Farbstoff, ein blauer Farbstoff oder eine Kombination davon ist.

**10.** Verfahren nach einem der Ansprüche 1 bis 9, wobei die Borierungsbehandlung ein Anordnen der Polymerfolie in Kontakt mit einer borsäurehaltigen wässrigen Lösung umfasst.

**11.** Verfahren nach Anspruch 10, wobei die Borsäurekonzentration von etwa 5 Gew.-% bis etwa 20 Gew.-% reicht.

**12.** Verfahren nach Anspruch 10 oder 11, wobei die wässrige Lösung ferner Borax aufweist.

**13.** Verfahren nach Anspruch 12, wobei die Boraxkonzentration von 0 Gew.-% bis etwa 7 Gew.-% reicht.

**14.** Verfahren nach einem der Ansprüche 1 bis 13, wobei die Temperatur der Borierungsbehandlung von etwa 80°C bis etwa 110°C reicht.

**15.** Verfahren nach einem der Ansprüche 1 bis 14, wobei die Polymerfolie einen Polymerisationsgrad aufweist, der von etwa 2000 bis etwa 4000 reicht.

## Revendications

**1.** Procédé pour réaliser un polarisateur à partir d’une feuille de polymère ayant une longueur originale et comprenant un haut polymère linéaire hydroxylé, le procédé comprenant :

d’étirer la feuille de polymère à une longueur étirée de plus de 5,0 fois à environ 7,0 fois la longueur originale,
d’introduire un catalyseur de déshydratation approprié à la feuille de polymère,
de chauffer la feuille de polymère et le catalyseur pour effectuer une déshydratation partielle de la feuille de polymère où des segments séquencés de vinylène absorbant de la lumière sont formés, et
de soumettre la feuille de polymère à un traitement au bore à une température élevée d’au moins environ 80 °C.

2. Procédé selon la revendication 1, comprenant en outre d'étirer de manière unidirectionnelle la feuille de polymère chauffée et étirée de 0 % à environ 70 % de la longueur étirée.

3. Procédé selon la revendication 1 ou 2, dans lequel le polymère élevé linéaire hydroxylé est un alcool de polyvinyle, un acétal de polyvinyle, un cétal de polyvinyle, ou un ester de polyvinyle.

4. Procédé selon l'une quelconque des revendications 1 à 3, dans lequel l'étape d'introduction comprend d'exposer la feuille de polymère à des vapeurs acides fumantes.

5. Procédé selon l'une quelconque des revendications 1 à 3, dans lequel l'étape d'introduction comprend de recouvrir la feuille de polymère avec un revêtement d'acide.

6. Procédé selon l'une quelconque des revendications 1 à 3, dans lequel l'étape d'introduction comprend
de placer un couche donneuse d'acide adjacente à la feuille de polymère, et
d'exposer la couche donneuse d'acide à une énergie de rayonnement pour libérer une ou plusieurs molécules d'acide.

7. Procédé selon la revendication 6, dans lequel l'énergie de rayonnement est de l'énergie thermique ou de l'énergie lumineuse ultraviolette.

8. Procédé selon l'une quelconque des revendications 1 à 7, comprenant en outre d'ajouter au moins un colorant dichroïque à la feuille de polymère.

9. Procédé selon la revendication 8, dans lequel le au moins un colorant dichroïque est un colorant jaune, un colorant bleu ou une combinaison de ceux-ci.

10. Procédé selon l'une quelconque des revendications 1 à 9, dans lequel le traitement au bore comprend de placer la feuille de polymère en contact avec une solution aqueuse comprenant de l'acide borique.

11. Procédé selon la revendication 10, dans lequel la concentration en acide borique se situe dans la gamme d'environ 5 % en poids à environ 20 % en poids.

12. Procédé selon la revendication 10 ou 11, dans lequel la solution aqueuse comprend en outre du borax.

13. Procédé selon la revendication 12, dans lequel la concentration en borax se situe dans la gamme de 0 % en poids à environ 7 % en poids.

14. Procédé selon l'une quelconque des revendications 1 à 13, dans lequel la température de traitement de bore se situe dans la gamme d'environ 80°C à environ 110°C.

15. Procédé selon l'une quelconque des revendications 1 à 14 dans lequel la feuille de polymère a un degré de polymérisation qui se situe dans la gamme d'environ 2000 à environ 4000.

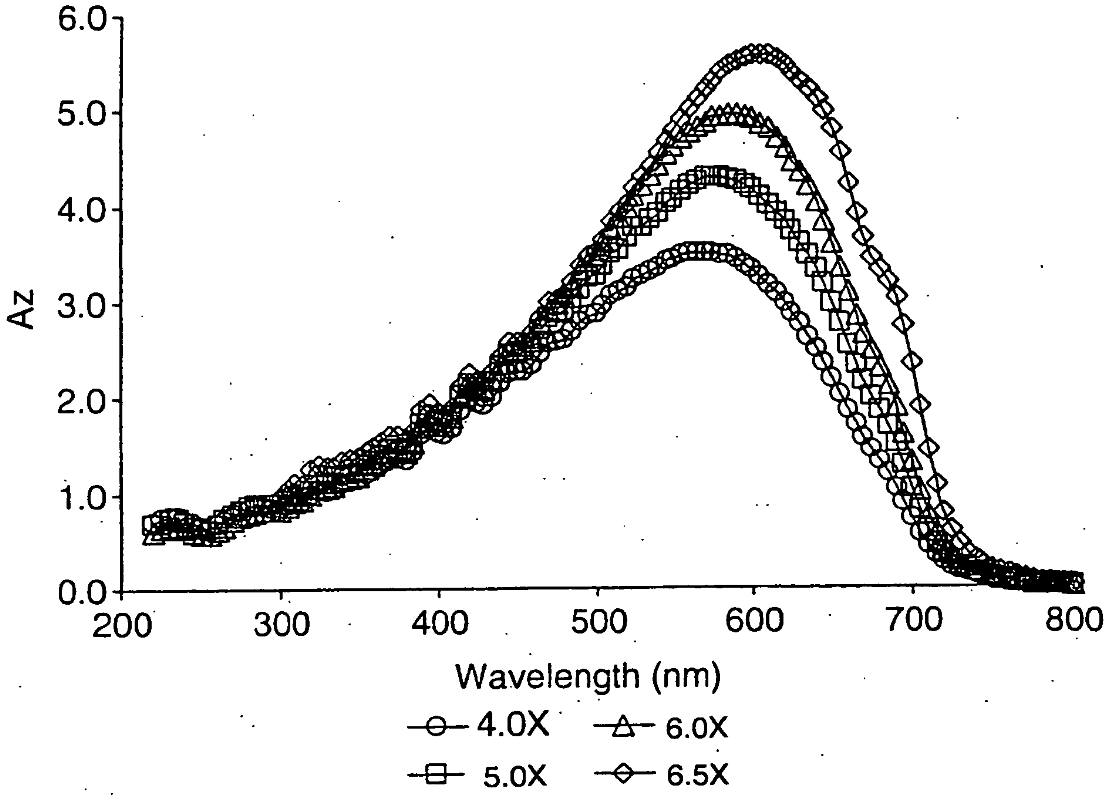
6.0
5.0
4.0
3.0
2.0
1.0
0.0
Az
200
300
400
500
600
700
800
Wavelength (nm)
4.0X
6.0X
5.0X
6.5X

*Fig. 1*

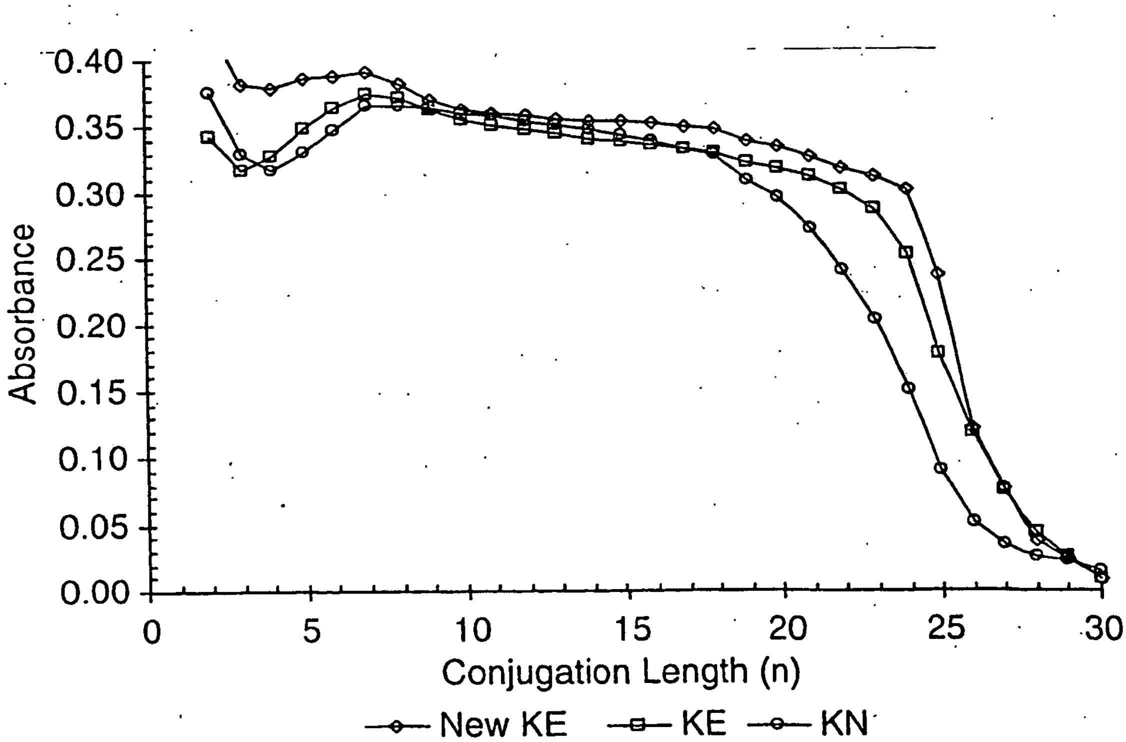
0.40
0.35
0.30
0.25
0.20
0.15
0.10
0.05
0.00
Absorbance
0
5
10
15
20
25
30
Conjugation Length (n)
New KE
KE
KN

*Fig. 2*

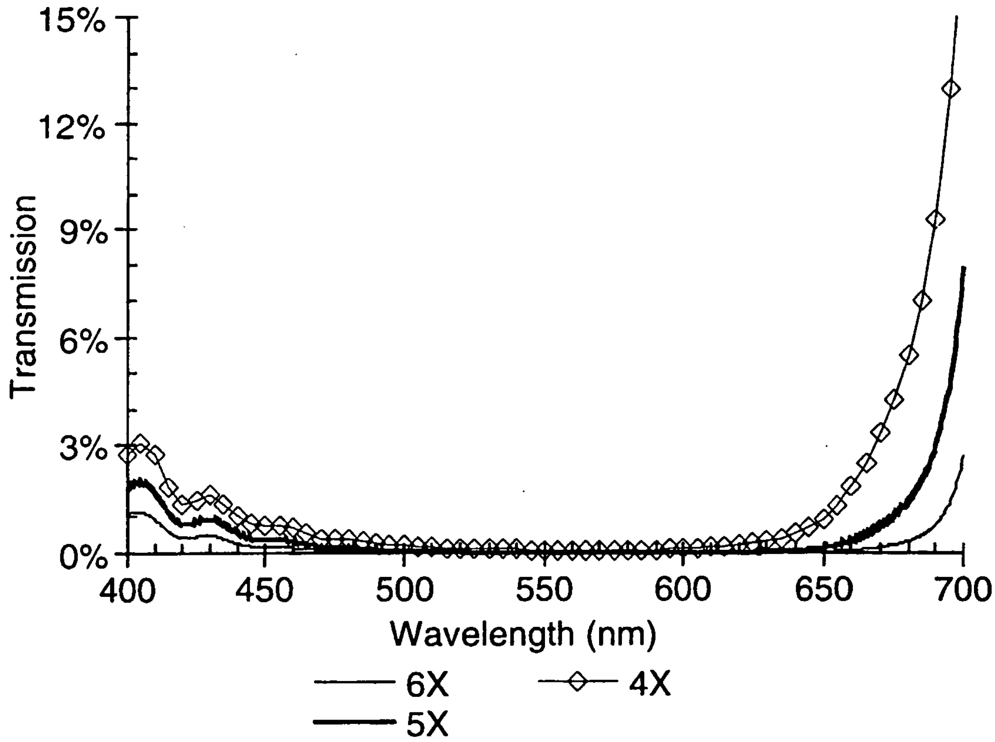


*Fig. 3*

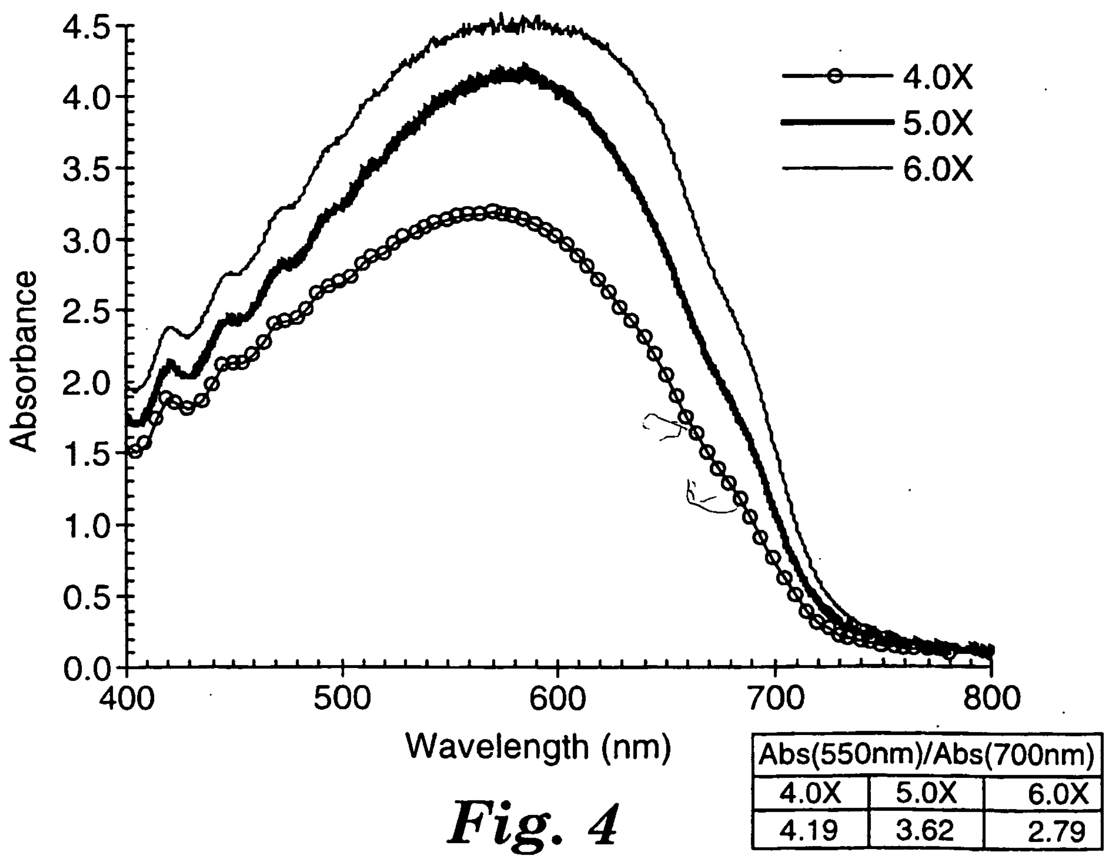


| Abs(550nm)/Abs(700nm) | | |
|---|---|---|
| 4.0X | 5.0X | 6.0X |
| 4.19 | 3.62 | 2.79 |

*Fig. 4*

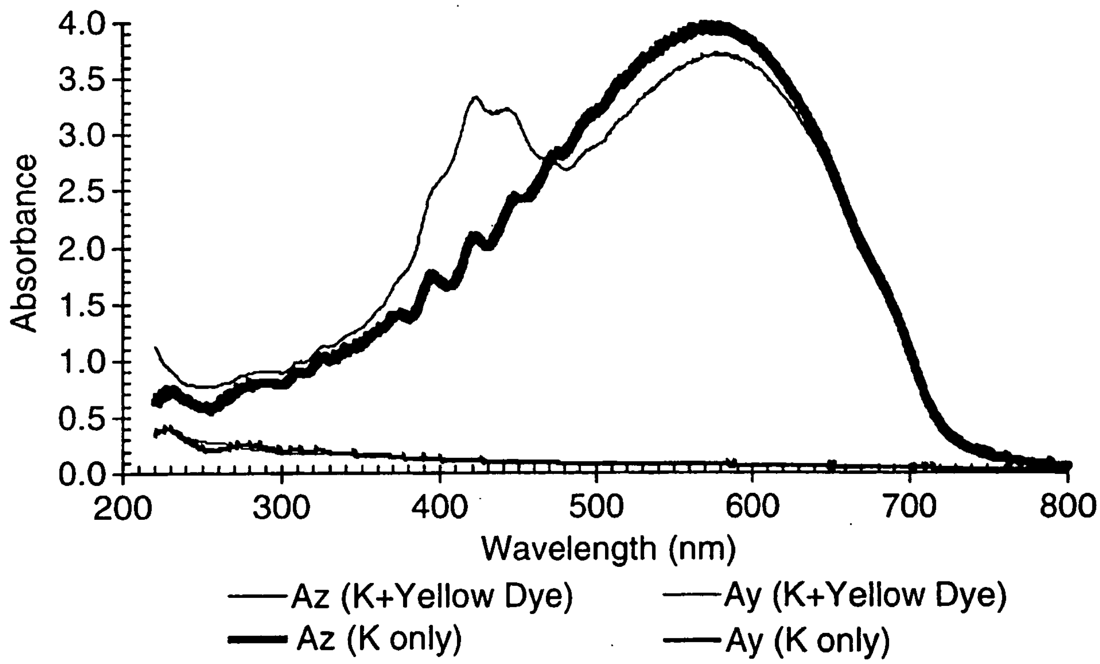
4.0
3.5
3.0
2.5
2.0
1.5
1.0
0.5
0.0
Absorbance
200
300
400
500
600
700
800
Wavelength (nm)
Az (K+Yellow Dye)
Ay (K+Yellow Dye)
Az (K only)
Ay (K only)

*Fig. 5*

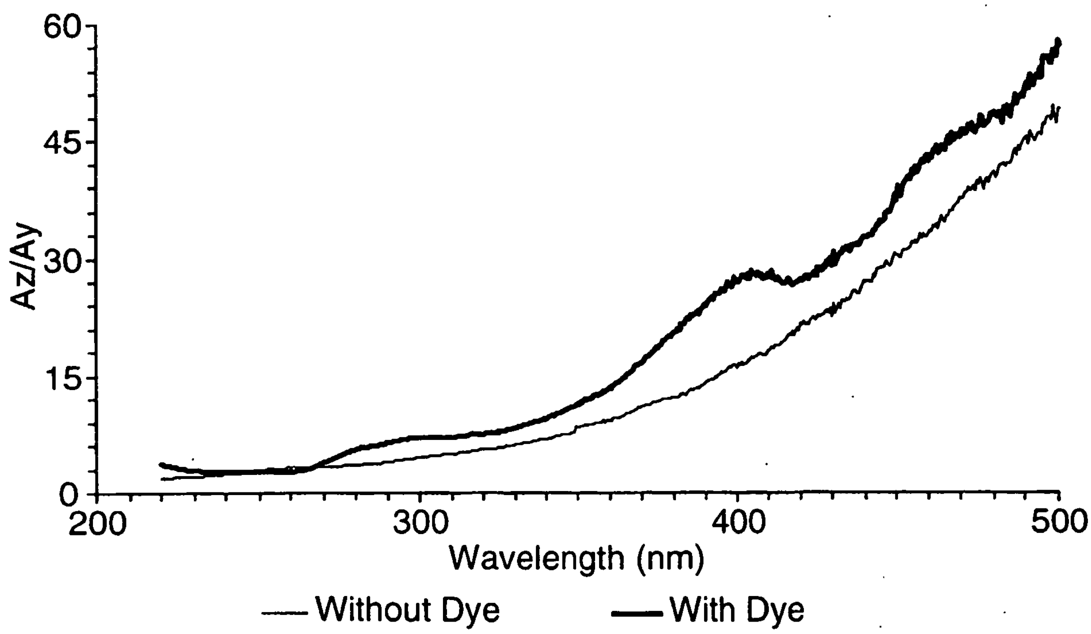
60
45
30
15
0
Az/Ay
200
300
400
500
Wavelength (nm)
Without Dye
With Dye

*Fig. 6*

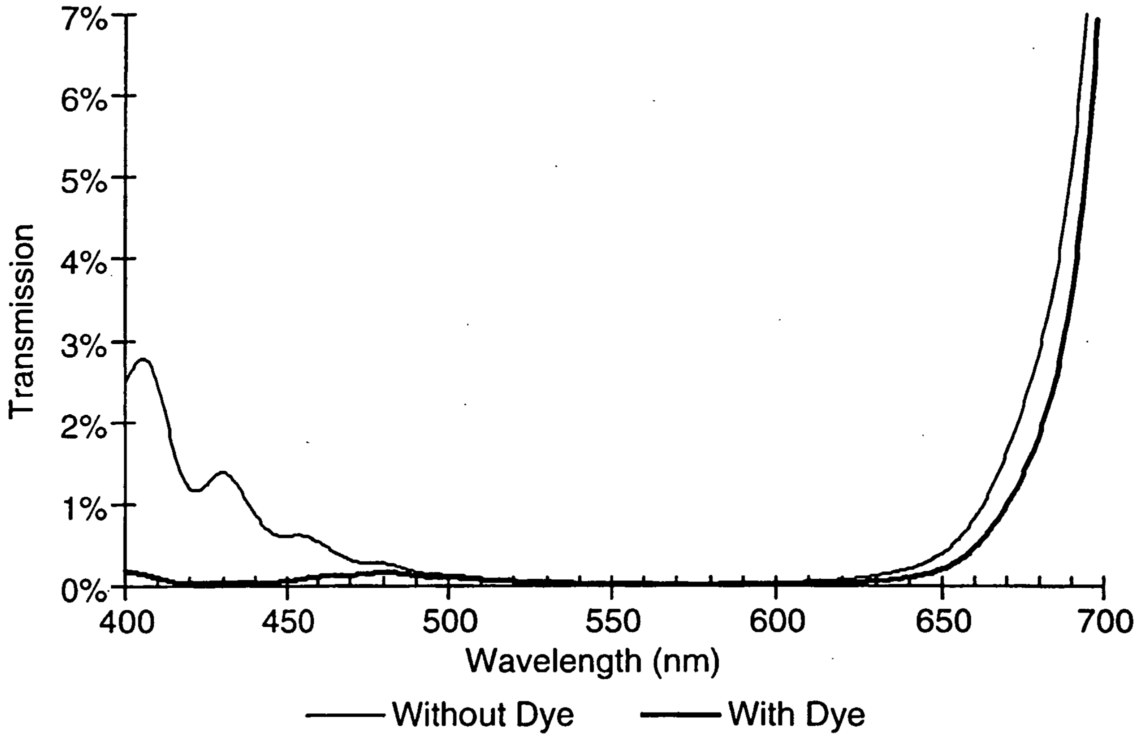
7%
6%
5%
4%
3%
2%
1%
0%
Transmission
400
450
500
550
600
650
700
Wavelength (nm)
Without Dye
With Dye

*Fig. 7*

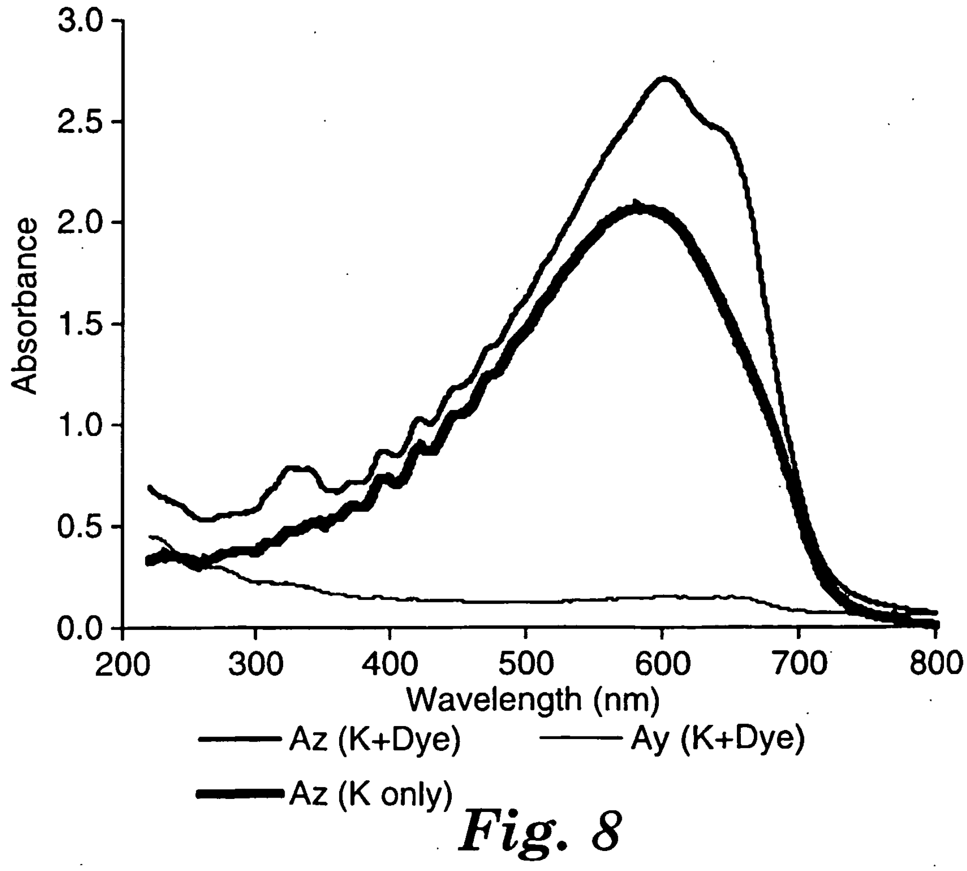
3.0
2.5
2.0
1.5
1.0
0.5
0.0
Absorbance
200
300
400
500
600
700
800
Wavelength (nm)
Az (K+Dye)
Ay (K+Dye)
Az (K only)

*Fig. 8*

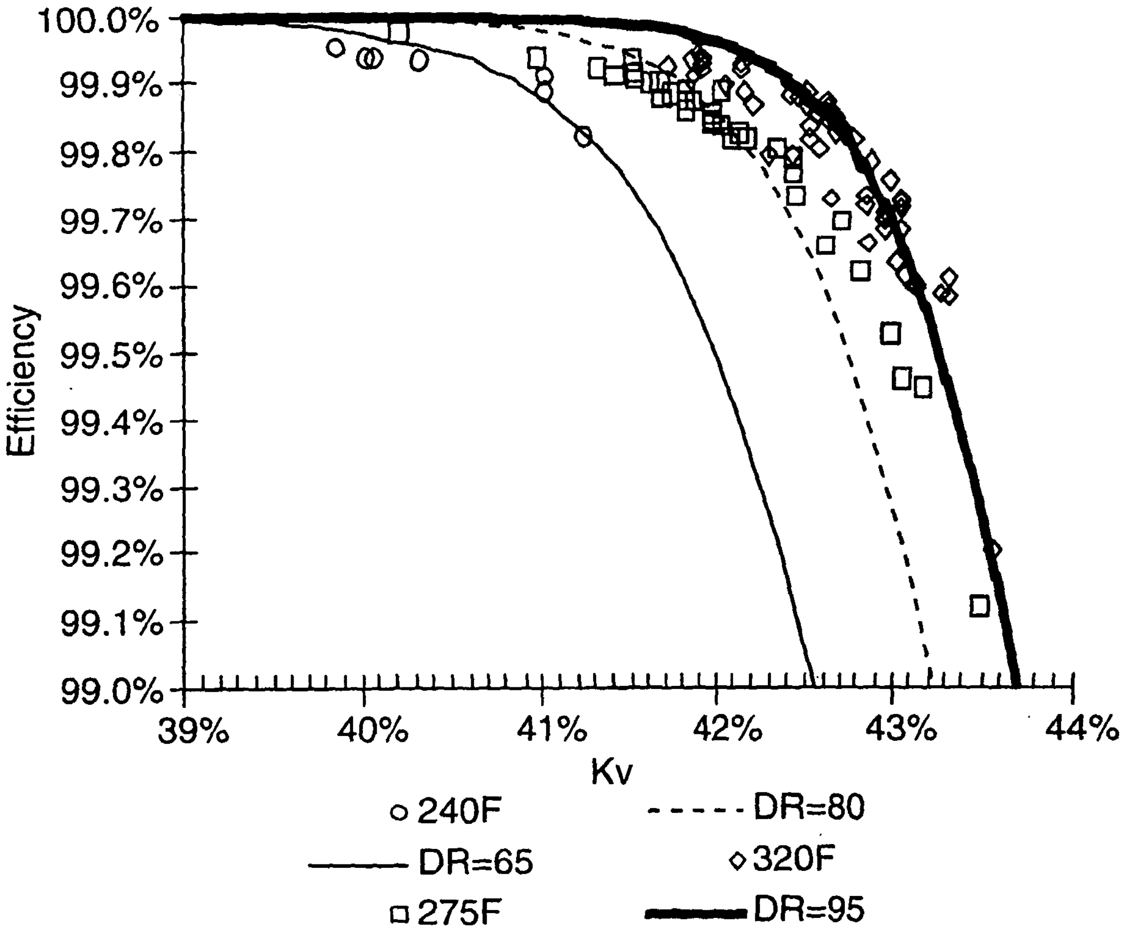
100.0%
99.9%
99.8%
99.7%
99.6%
99.5%
99.4%
99.3%
99.2%
99.1%
99.0%
Efficiency
39%
40%
41%
42%
43%
44%
Kv
240F
DR=80
DR=65
320F
275F
DR=95

*Fig. 9*

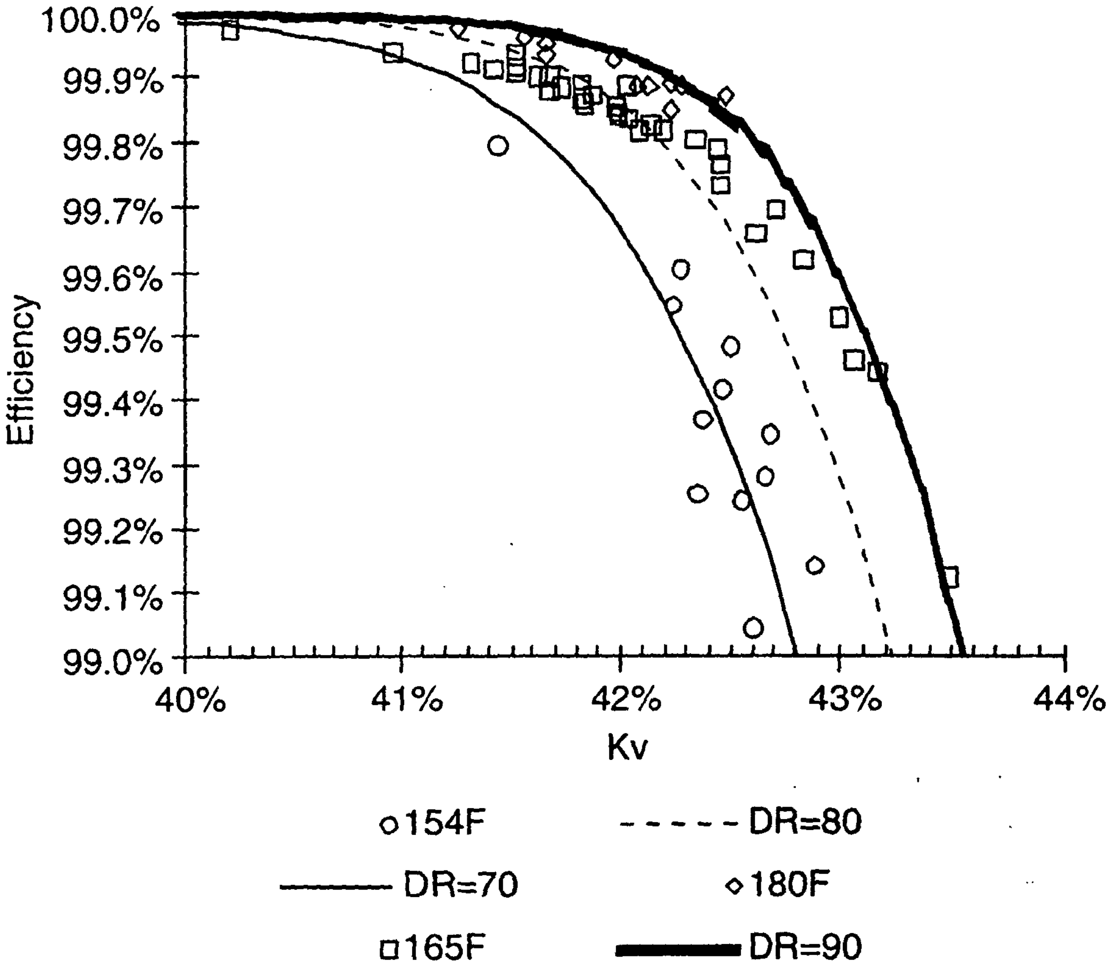
100.0%
99.9%
99.8%
99.7%
99.6%
99.5%
99.4%
99.3%
99.2%
99.1%
99.0%
Efficiency
40%
41%
42%
43%
44%
Kv
○154F
DR=80
DR=70
◇180F
□165F
DR=90

*Fig. 10*

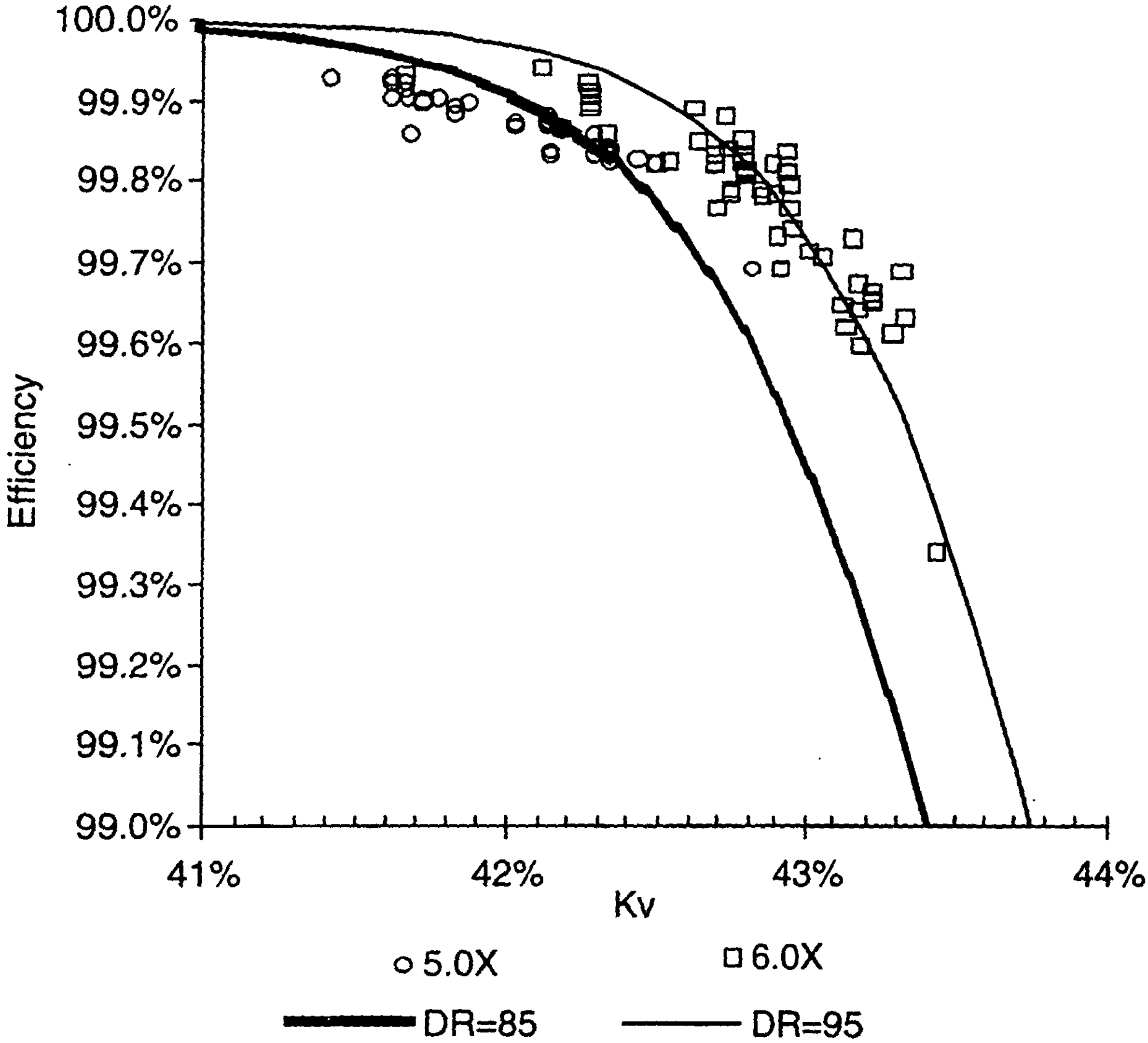
100.0%
99.9%
99.8%
99.7%
99.6%
99.5%
99.4%
99.3%
99.2%
99.1%
99.0%
Efficiency
41%
42%
43%
44%
Kv
5.0X
6.0X
DR=85
DR=95

*Fig. 11*

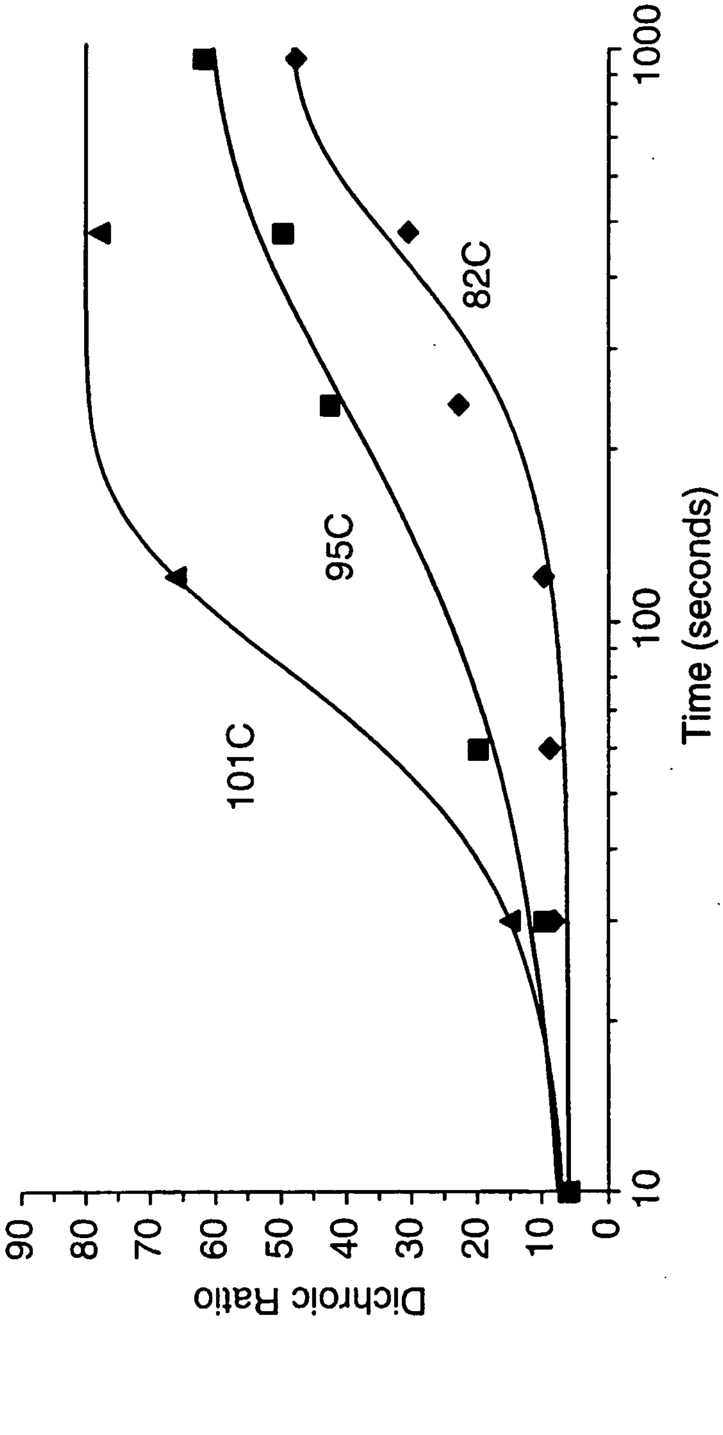
Dichroic Ratio
0
10
20
30
40
50
60
70
80
90
Time (seconds)
10
100
1000
101C
95C
82C

*Fig. 12*

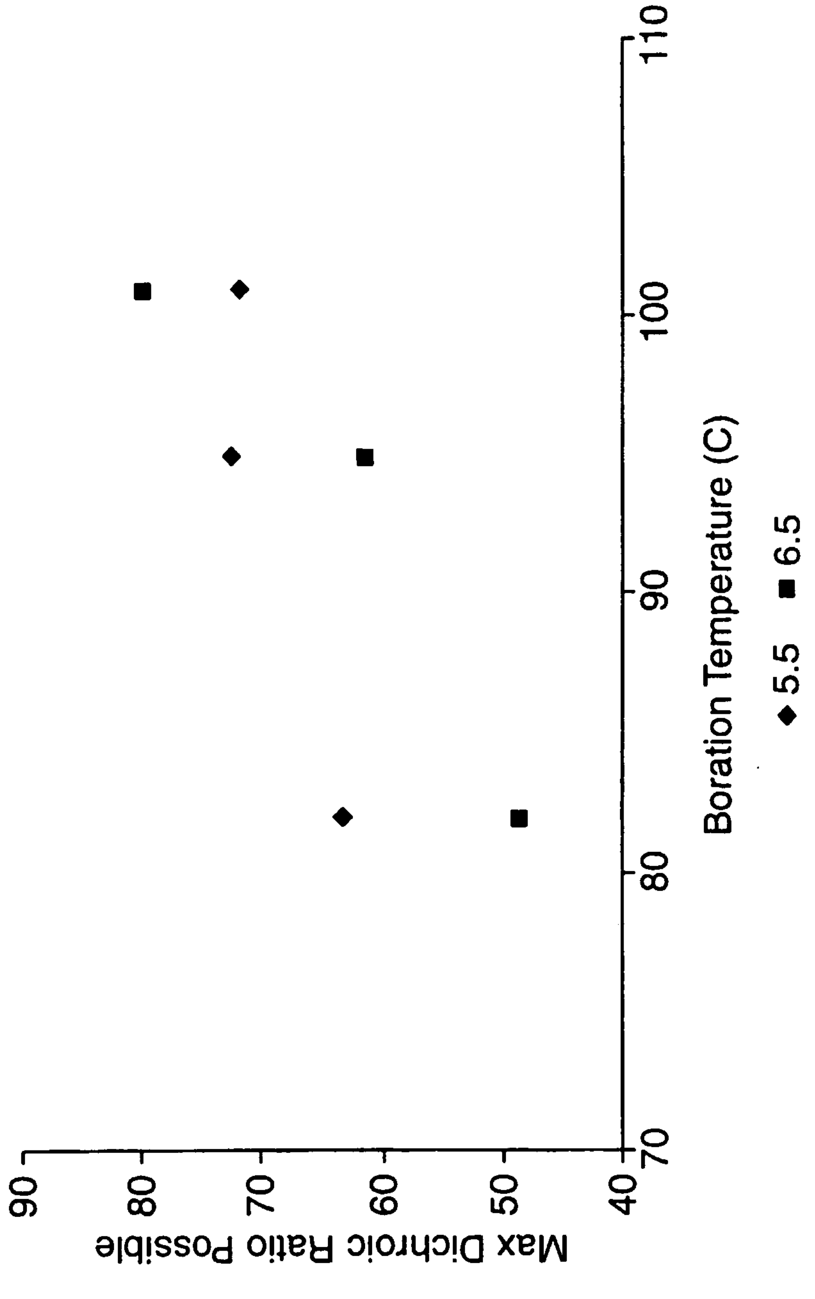
Max Dichroic Ratio Possible
90
80
70
60
50
40
70
80
90
100
110
Boration Temperature (C)
5.5
6.5

*Fig. 13*

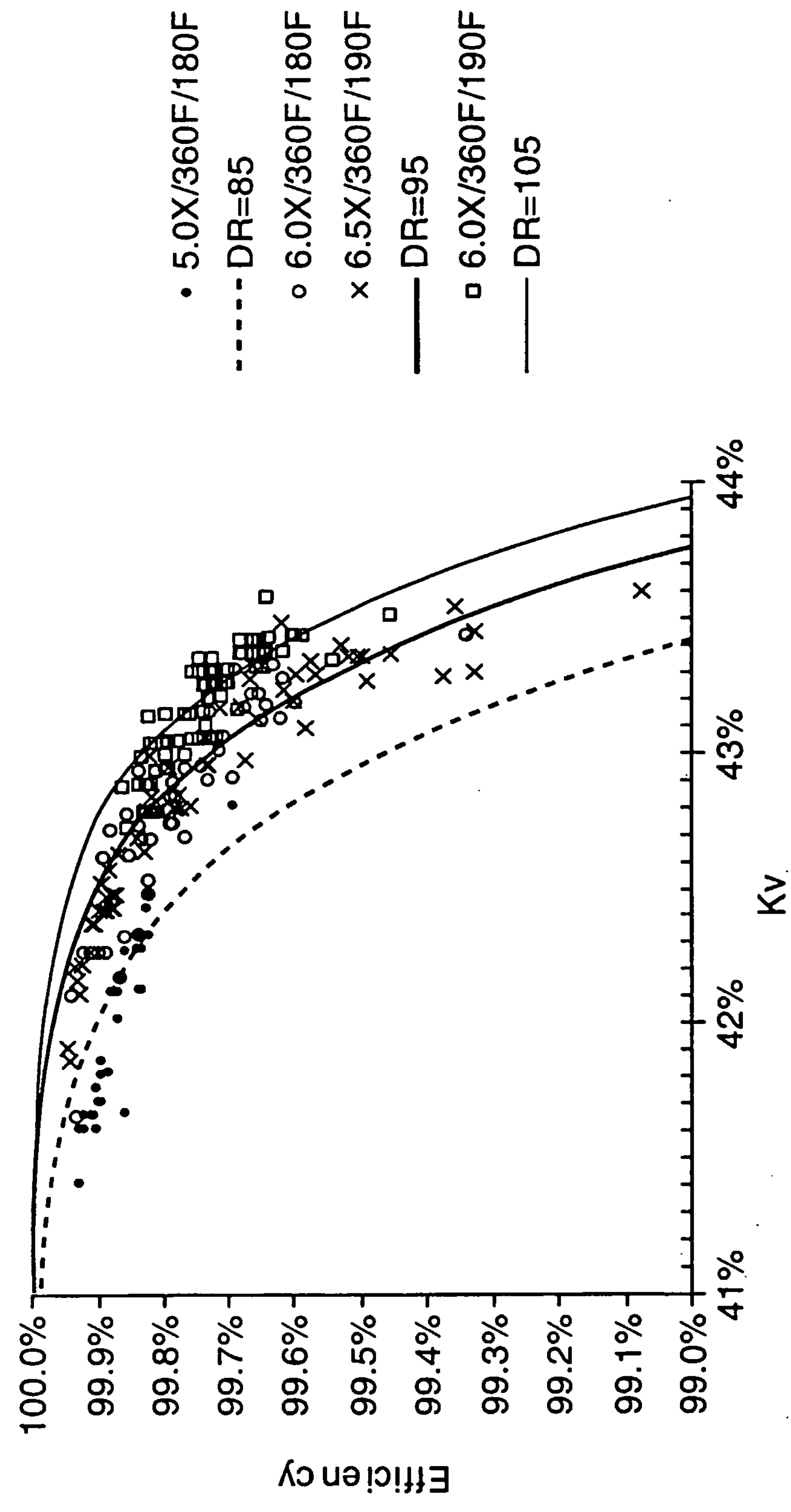
• 5.0X/360F/180F
DR=85
o 6.0X/360F/180F
x 6.5X/360F/190F
DR=95
□ 6.0X/360F/190F
DR=105
Efficien cy
100.0%
99.9%
99.8%
99.7%
99.6%
99.5%
99.4%
99.3%
99.2%
99.1%
99.0%
41%
42%
43%
44%
Kv

*Fig. 14*

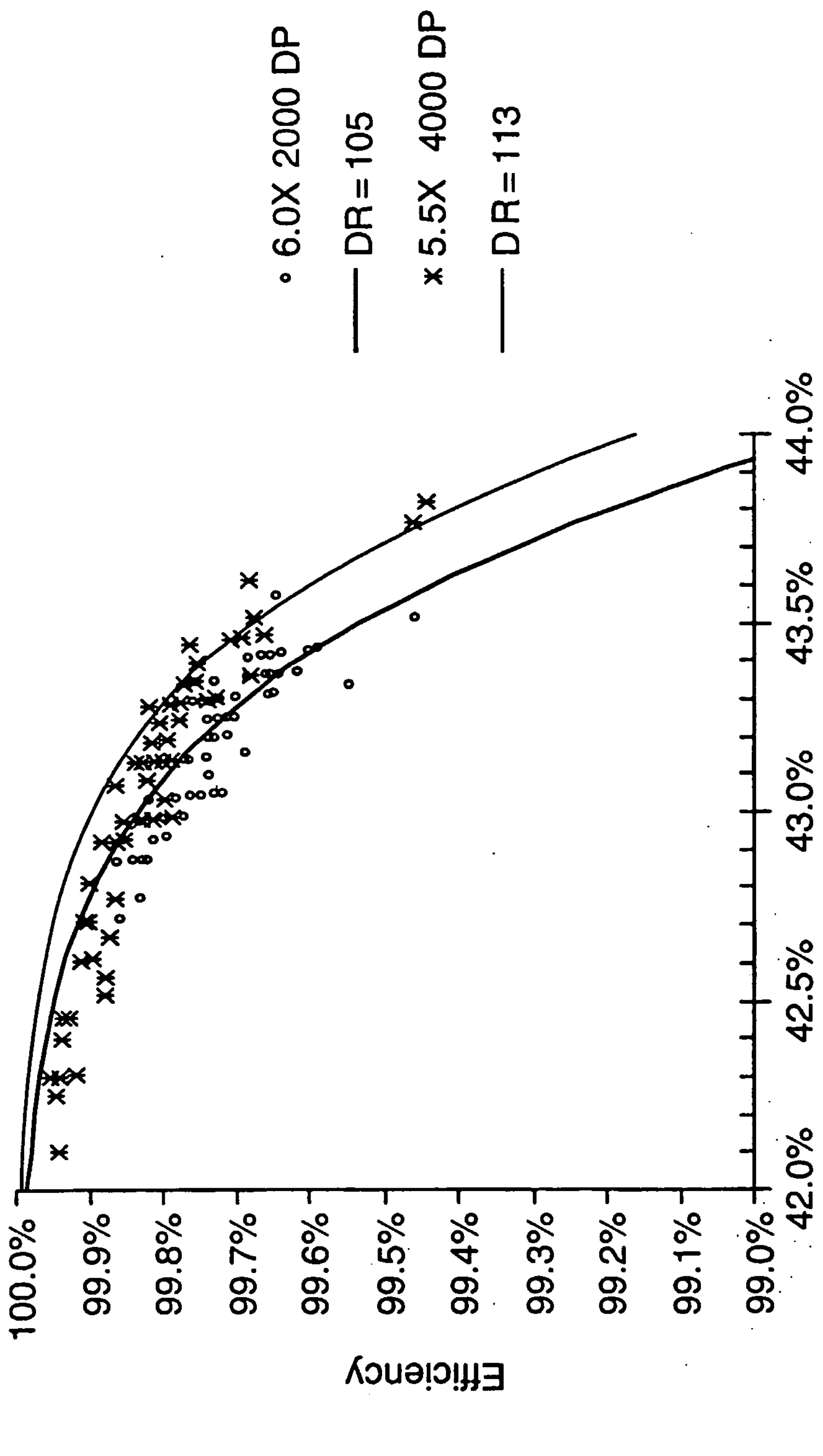

Efficiency
100.0%
99.9%
99.8%
99.7%
99.6%
99.5%
99.4%
99.3%
99.2%
99.1%
99.0%
42.0%
42.5%
43.0%
43.5%
44.0%
Kv
6.0X 2000 DP
DR=105
5.5X 4000 DP
DR=113


*Fig. 15*

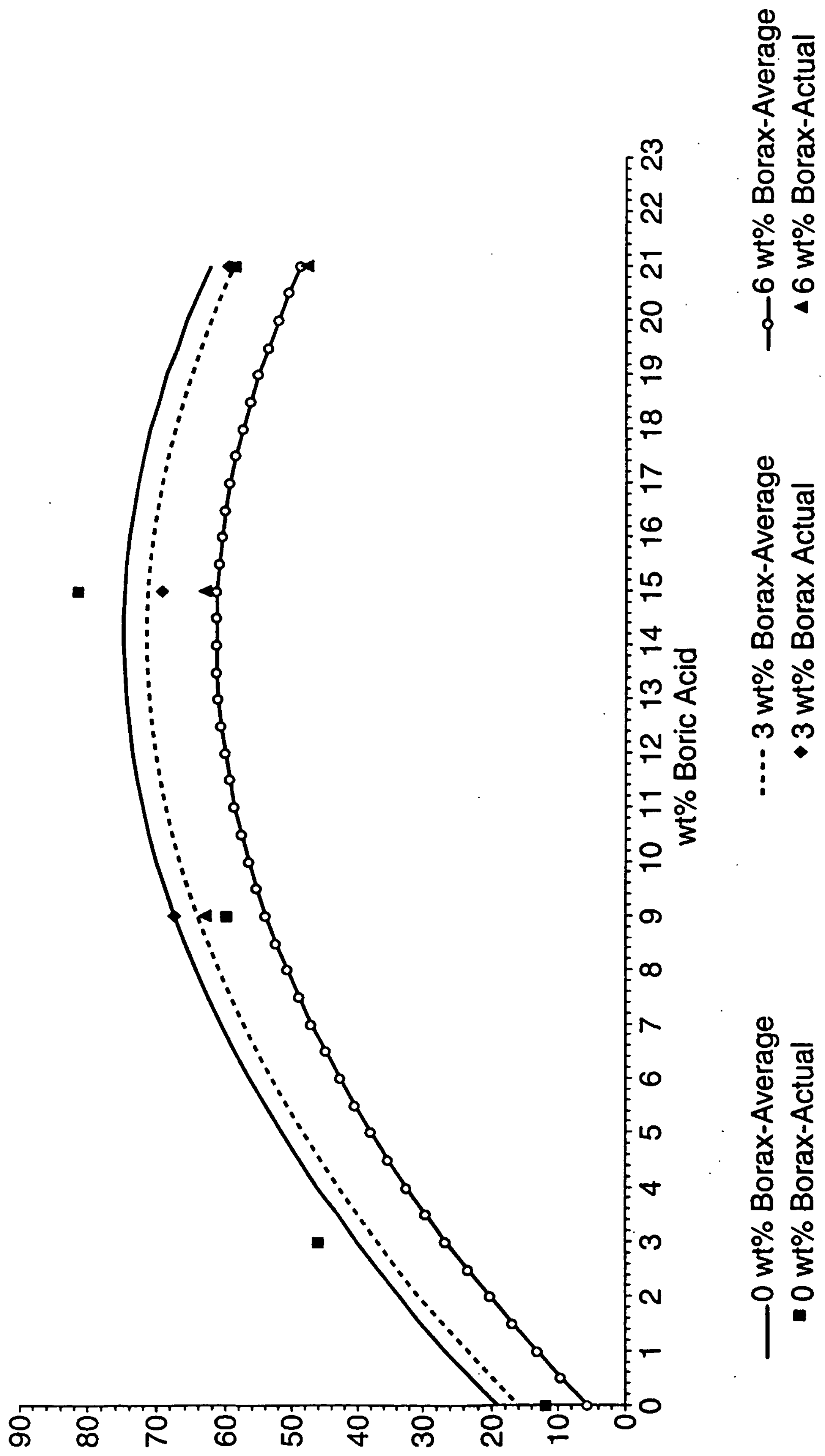
Dichroic Ratio
0
10
20
30
40
50
60
70
80
90
wt% Boric Acid
0 1 2 3 4 5 6 7 8 9 10 11 12 13 14 15 16 17 18 19 20 21 22 23
0 wt% Borax-Average
0 wt% Borax-Actual
3 wt% Borax-Average
3 wt% Borax Actual
6 wt% Borax-Average
6 wt% Borax-Actual

*Fig. 16*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5666223 A, Bennett
- US 5973834 A, Kadaba
- US 4895769 A, Land
- US 4948857 A
- US 4772663 A
- US 4659523 A